# EUROPEAN PATENT APPLICATION

(11) **EP 1 619 896 A2**
(43) Date of publication of application: **25.01.2006**
(21) Application number: 05254544.9
(22) Date of filing: 21.07.2005
(51) Int. Cl.: H04N 7/16

(54) **System and method for protecting information**

(30) Priority: 22.07.2004 JP 2004213882
(71) Applicant: SONY CORPORATION, Tokyo 141 (JP)
(72) Inventor: Saeki, Keiko, Shinagawa-Ku Tokyo 141 (JP); Ebihara, Munetake, Shinagawa-Ku Tokyo 141 (JP); Adachi, Kazuhide, Shinagawa-Ku Tokyo 141 (JP)
(74) Representative: Mills, Julia

(57) **Abstract**

In an information-processing system, information is divided into first units of information, a single number is generated for each of second units of information including the first units of information, a first key is generated for encrypting each of the numbers, a second key is generated for each of the second units of information by encrypting the number generated for the second unit of information by using the first key, each of the first units of information is encrypted by using the second key, the encrypted first units of information, the number, and the first key are stored, the second key is generated for each of the second units of information by encrypting the stored number by using the first key, and each of the stored and encrypted first units of information is decrypted by using the second key.

## Description

The present invention contains subject matter related to Japanese Patent Application JP 2004-213882 filed in the Japanese Patent Office on July 22, 2004, the entire contents of which are incorporated herein by reference.

The present invention relates to the field of information-processing systems, information-processing apparatus, information-processing methods, and programs, and particularly relates to an information-processing system, an information-processing apparatus, an information-processing method, and a program that can protect information.

In the past, an apparatus on the transfer side encrypts information or plain text for transferring the information with safe and an apparatus on the reception side decrypts the encrypted information or plain text, so as to obtain the original information or plain text before the encryption.

For example, ISMA Crypt is disclosed in "Internet Streaming Media Alliance Encryption and Authentication Specification Version 1.0 February 2004", as a standardized stream cipher system. This system allows protecting plain text by calculating an exclusive OR (XOR) of a data stream and a crypt stream.

However, if the information or plain text is identified, ISMA Crypt allows identifying the crypt stream, so that contents can be interchanged by using the identified crypt stream. Subsequently, the contents cannot be transferred with safe.

If a technology for dividing a single unit of contents into two portions and coupling the divided contents portions to each other is used in combination with the above-described system, the divided contents portions are encrypted by one and the same key. Therefore, if an ill-intentioned user makes a copy of predetermined contents, adds the copy so that the copy follows the predetermined contents, and divides the predetermined contents and the copy into two units of contents, the duplication of the predetermined contents is generated. Thus, it has been difficult to protect contents with reliability.

Accordingly, embodiments of the present invention seek to protect information with reliability.

Various respective aspects of the present invention are set out in the appended claims.

A first information-processing system according to an embodiment of the present invention includes a unit-division section that divides the information into predetermined units of information, that is, first units of information, a number-generation section for generating a single number for each of second units of information including the first units of information, a key-generation section for generating a first key used for encrypting each of the numbers, a first encryption section for generating a second key for each of the second units of information by encrypting the number generated for each of the second units of information by using the first key, a second encryption section for encrypting each of the first units of information by using the second key, a storage section for storing the first units of information encrypted by the second encryption section, the number, and the first key, a third encryption section for generating the second key for each of the second units of information by encrypting the number stored in the storage section by using the first key, and a decryption section for decrypting each of the first units of information that are encrypted and stored in the storage section by using the second key generated by the third encryption section.

A first program according to another embodiment of the present invention is configured to make a computer execute processing including the steps of dividing the information into predetermined units of information, that is, first units of information, generating a single number for each of second units of information including the first units of information, generating a first key used for encrypting each of the numbers, performing first encryption wherein a second key is generated for each of the second units of information by encrypting the number generated for each of the second units of information by using the first key, performing second encryption wherein each of the first units of information of the second unit of information is encrypted by using the second key, performing control on storage of the first units of information encrypted by the second encryption, the number, and the first key, performing third encryption wherein the second key is generated for each of the second units of information by encrypting the number that was stored under the control performed by the storage control by using the first key, and decrypting each of the first units of information that are encrypted and stored under the control performed by the storage control by using the second key generated by the third encryption.

According to the first information-processing system and the first program, the information is divided into predetermined units of information, that is, the first units of information, the single number is generated for each of second units of information including the first units of information, the first key used for encrypting each of the numbers is generated, the second key is generated for each of the second units of information by encrypting the number generated for each of the second units of information by using the first key, each of the first units of information is encrypted by using the second key, and the encrypted first units of information, the number, and the first key are stored. Further, the second key is generated for each of the second units of information by encrypting the stored number by using the first key and each of the stored and encrypted first units of information is decrypted by using the second key.

A first information-processing apparatus according to another embodiment of the present invention includes a unit-division section that divides information into predetermined units of information, that is, first units of information, a number-generation section for generating a single number for each of second units of information including the first units of information, a key-generation section for generating a first key used for encrypting each of the numbers, a first encryption section for generating a second key for each of the second units of information by encrypting the number generated for each of the second units of information by using the first key, and a second encryption section for encrypting each of the first units of information by using the second key.

The first information-processing apparatus further includes a storage section for storing the second units of information, where each of the second units of information includes the first units of information encrypted by the second encryption section, the number generated for each of the second units of information so that the second unit of information and the number are correlated to each other, and the first key.

The first unit of information includes any one of a picture I, a picture B, and a picture P, the second unit of information is a single GOP, that is, a single group of pictures I, B, and/or P, the unit-division section divides the information into the pictures, the number-generation unit generates the number for each of the GOPs, the first encryption section generates the second key for each of the GOPs by encrypting the number by using the first key, and the second encryption section encrypts each of the pictures included in the GOP by using the second key.

The first information-processing apparatus further includes a license-generation section for generating a first license relating to the information, where the first license includes at least the number that correlates to the second unit of information and that permits encryption for decrypting the correlated second unit of information, and the first key, wherein the storage section stores the second units of information, where each of the second units of information includes the first units of information that are encrypted by the second encryption section, and the number generated for each of the second units of information so that the second unit of information and the number are correlated to each other, and further stores the first license including at least the first key.

The first information-processing apparatus further includes an information-division section for dividing the encrypted information according to an instruction transmitted from a user, wherein the license-generation section generates a second license corresponding to each of the divided units of information based on the information divided by the information-division section and the first license stored in the storage section.

A first information-processing method according to another embodiment of the present invention includes the steps of dividing the information into predetermined units of information, that is, first units of information, generating a single number for each of second units of information including the first units of information, generating a first key used for encrypting each of the numbers, performing first encryption wherein a second key is generated for each of the second units of information by encrypting the number generated for each of the second units of information by using the first key, and performing second encryption wherein each of the first units of information of the second unit of information is encrypted by using the second key.

A second program according to another embodiment of the present invention is configured to make a computer execute processing including the steps of dividing the information into predetermined units of information, that is, first units of information, generating a single number for each of second units of information including the first units of information, generating a first key used for encrypting each of the numbers, performing first encryption wherein a second key is generated for each of the second units of information by encrypting the number generated for each of the second units of information by using the first key, and performing second encryption wherein each of the first units of information of the second unit of information is encrypted by using the second key.

Thus, the information is divided into predetermined units of information, that is, the first units of information, the single number is generated for each of the second units of information including the first units of information, the first key used for encrypting each of the numbers is generated, the second key is generated for each of the second units of information by encrypting the number generated for each of the second units of information by using the first key, and each of the first units of information of the second unit of information is encrypted by using the second key.

In a second information-processing apparatus according to another embodiment of the present invention, information is divided into predetermined units of information, that is, first units of information and a single number generated for each of second units of information including the first units of information is encrypted by using a first key generated for encrypting each of the numbers, whereby a second key is generated for each of the second units of information, and each of the encrypted first units of information is decrypted by using the second key. The second information-processing apparatus includes a number-acquisition section for acquiring the number generated for each of the second units of information, a key-acquisition section for acquiring the first key for encrypting each of the numbers acquired by the number-acquisition section, an encryption section for generating the second key for each of the second units of information by encrypting the number acquired by the number-acquisition section by using the first key acquired by the key-acquisition section, and a decryption section for decrypting each of the first units of information that are encrypted and included in the second unit of information by using the second key generated by the encryption section.

The first unit of information includes any one of a picture I, a picture B, and a picture P, the second unit of information is a single GOP, that is, a single group of the pictures I, B, and/or P, and the decryption section decrypts each of the pictures included in the GOP by using the second key.

The information further includes a license relating to the information, where the license includes at least the number that corresponds to the second unit of information and that permits encryption for decrypting the corresponding second unit of information, and the first key.

A second information-processing method according to another embodiment of the present invention is used for an information-processing apparatus wherein information is divided into predetermined units of information, that is, first units of information and a single number generated for each of second units of information including the first units of information is encrypted by using a first key generated for encrypting each of the numbers, whereby a second key is generated for each of the second units of information, and each of the encrypted first units of information is decrypted by using the second key. The second information-processing method includes the steps of acquiring the number generated for each of the second units of information, acquiring the first key used for encrypting each of the numbers acquired by the number acquisition, performing encryption for generating the second key for each of the second units of information by encrypting the number acquired by the number acquisition by using the first key acquired by the key acquisition, and decrypting each of the first units of information encrypted and included in the second unit of information by using the second key generated by the encryption.

In a third program according to another embodiment of the present invention, information is divided into predetermined units of information, that is, first units of information and a single number generated for each of second units of information including the first units of information is encrypted by using a first key generated for encrypting each of the numbers, whereby a second key is generated for each of the second units of information, and each of the encrypted first units of information is decrypted by using the second key. The third program makes a computer execute processing including the steps of acquiring the number generated for each of the second units of information, acquiring the first key for encrypting each of the numbers acquired by the number acquisition, performing encryption for generating the second key for each of the second units of information by encrypting the number acquired by the number acquisition by using the first key acquired by the key acquisition, and decrypting each of the first units of information that are encrypted and included in the second unit of information by using the second key generated by the encryption.

Thus, the number generated for each of the second units of information is acquired, the first key for encrypting each of the acquired numbers is acquired, the second key is generated for each of the second units of information by encrypting the acquired number by using the first key, and each of the encrypted first units of information included in the second unit of information is decrypted by using the second key.

Embodiments of the present invention seek to protect information with reliability, and particularly to prevent the information from being used improperly and to transfer the information safely.

The present invention will be described further, by way of example only, with reference to preferred embodiments thereof as illustrated in the accompanying drawings, in which:
Fig. 1 shows an example configuration of an entire information-processing system according to an embodiment of the present invention;
Fig. 2 is a block diagram showing an example configuration of the hardware of a personal computer (PC) shown in Fig. 1;
Fig. 3 is a block diagram showing an example functional configuration of the PC shown in Fig. 1;
Fig. 4 illustrates the flow of processing performed for storing contents;
Fig. 5 illustrates the flow of processing performed for reproducing the stored contents;
Fig. 6 illustrates how the contents are divided and coupled to each other;
Fig. 7 is a block diagram showing an example functional configuration of an encryption unit shown in Fig. 3;
Fig. 8 is a block diagram showing an example functional configuration of a decryption unit shown in Fig. 3;
Fig. 9 is a flowchart illustrating processing performed for storing the contents;
Fig. 10 is a flowchart illustrating processing performed for encrypting the contents;
Fig. 11 illustrates the configuration of data where a Seed is added thereto;
Fig. 12 illustrates the configuration of data where the Seed is not added thereto;
Fig. 13 shows example contents stored in a storage unit;
Fig. 14 is a flowchart illustrating processing performed for reproducing the contents; performed for reproducing the contents;
Fig. 15 is a flowchart illustrating processing performed for decrypting the contents;
Fig. 16 is a flowchart illustrating processing performed for dividing the contents;
Fig. 17 is another flowchart illustrating the processing performed for dividing the contents;
Fig. 18A illustrates the data configuration corresponding to the contents that are not yet divided;
Fig. 18B illustrates the data configuration corresponding to the contents that are divided;
Fig. 19 is a flowchart illustrating processing performed for coupling the divided contents to each other; and
Fig. 20 schematically shows the generation of a block key, the contents encryption, and the contents decryption.

Embodiments of the present invention will be described below. The description supports the present invention disclosed in this specification but does not deny the existence of an invention that is not claimed in this application. Namely, the description does not deny the existence of at least one invention that may appear in the future. The above-described invention may be an invention that is divided off from the present invention, or an invention that is generated or added by amendment.

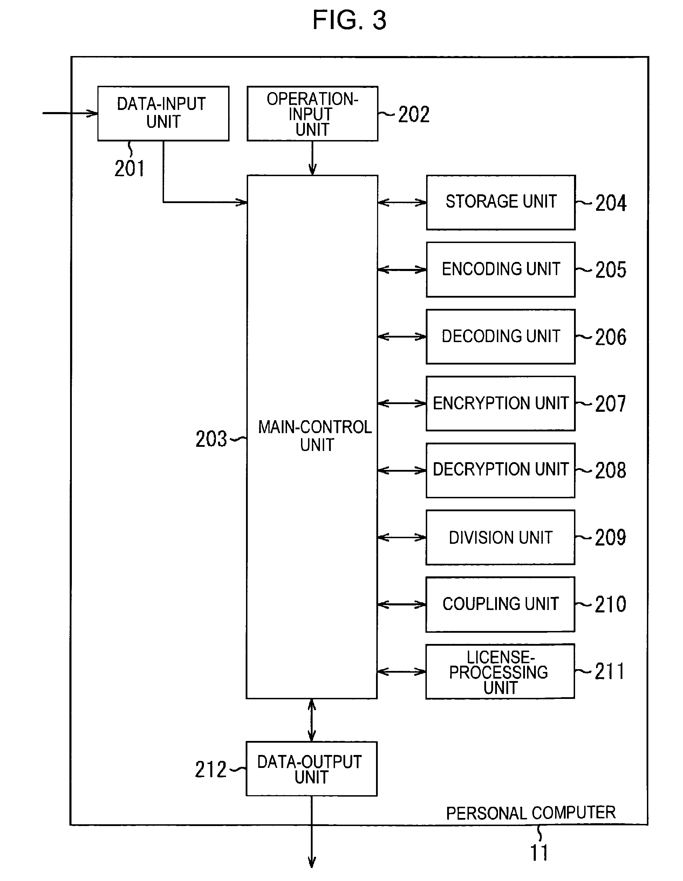

There is provided an information-processing system such as a personal computer 11 including an encryption unit 207 and a decryption unit 208, as shown in Fig. 3.

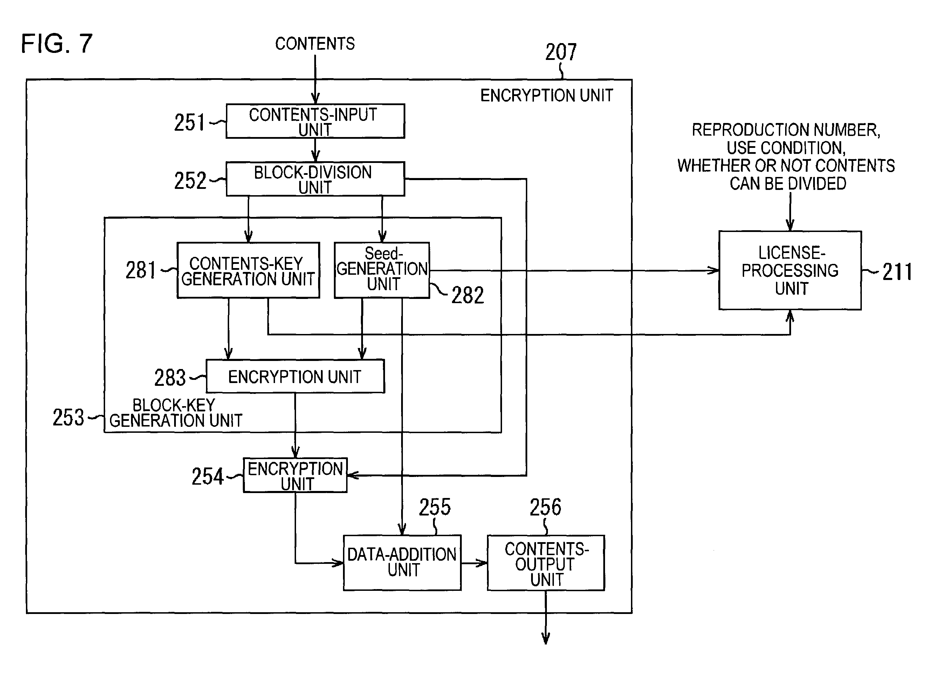

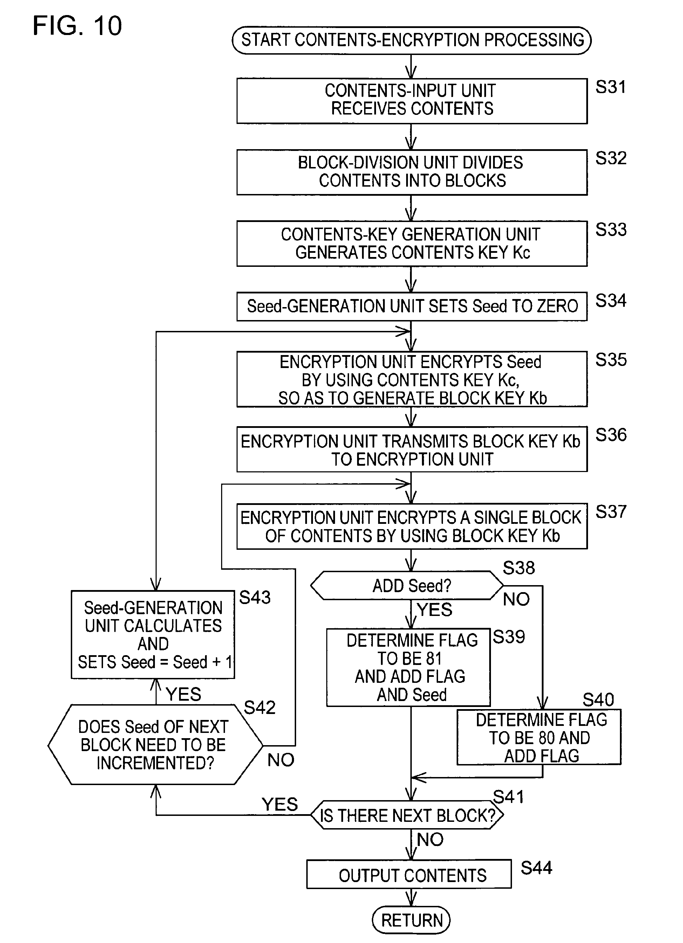

The information-processing system includes a unit-division section such as a block-division unit 252 shown in Fig. 7 for performing processing corresponding to step S32 shown in Fig. 10. The unit-division section divides the information such as contents into predetermined units of information, that is, first units of information including pictures I, P, and B, for example.

The information-processing system further includes a number-generation section, such as a Seed-generation unit 282 shown in Fig. 7 for performing processing corresponding to step S34 and/or step S43 shown in Fig. 10. The number-generation section generates a single number (e.g., a Seed) for a single second unit of information (e.g., a single GOP) including the first units of information.

The information-processing system further includes a key-generation section such as a contents-key generation unit 281 shown in Fig. 7 for performing processing corresponding to step S33 shown in Fig. 10. The key-generation section generates a first key such as a contents-key Kc used for encrypting each of the numbers generated by the number-generation section.

The information-processing system further includes a first encryption section such as an encryption unit 283 shown in Fig. 7 for performing processing corresponding to step S35 shown in Fig. 10. The first encryption section generates a second key such as a block key Kb for each of the second units of information by encrypting the number generated for each of the second units of information by using the first key.

The information-processing system further includes a second encryption section such as an encryption unit 254 shown in Fig. 7 for performing processing corresponding to step S37 shown in Fig. 10. The second encryption section encrypts each of the first units of information by using the second key.

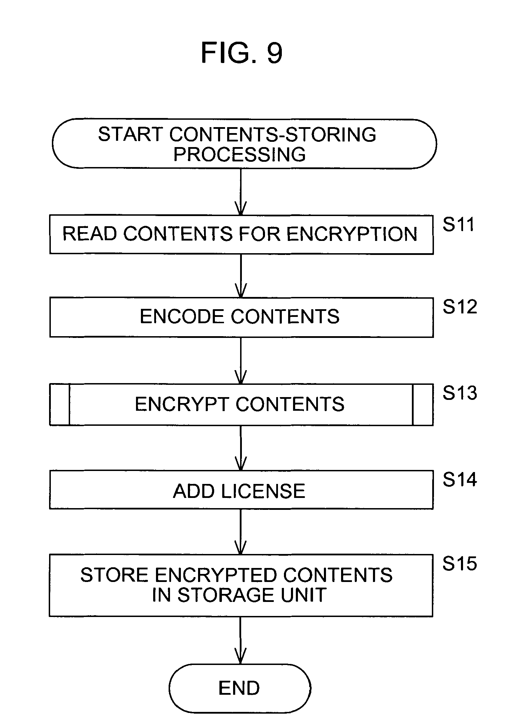

The information-processing system further includes a storage section such as a storage unit 204 shown in Fig. 3 for performing processing corresponding to step S15 shown in Fig. 9. The storage section stores the first units of information encrypted by the second encryption section, the numbers, and the first keys.

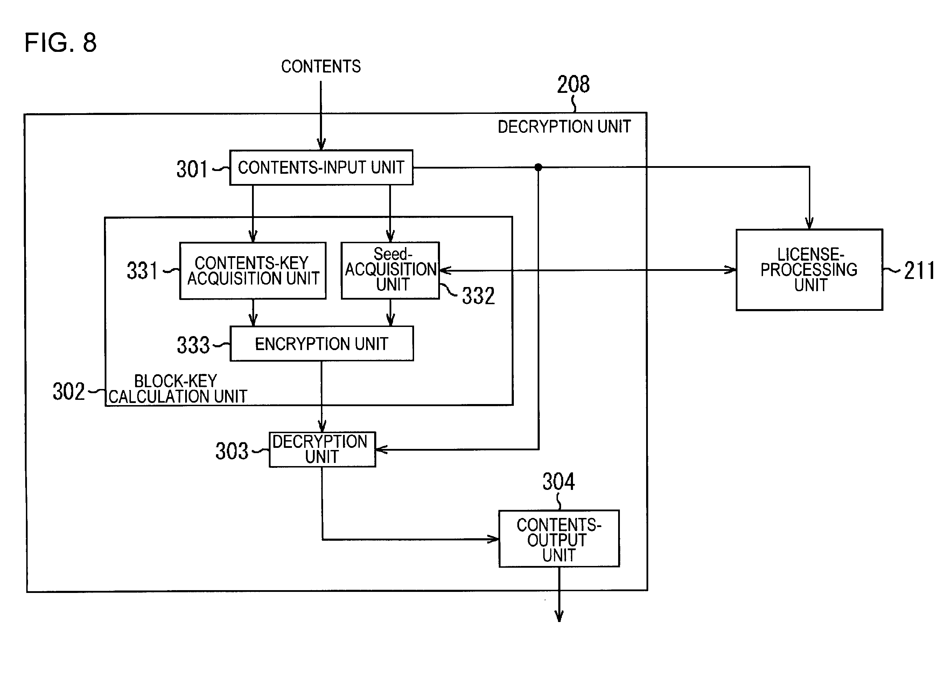

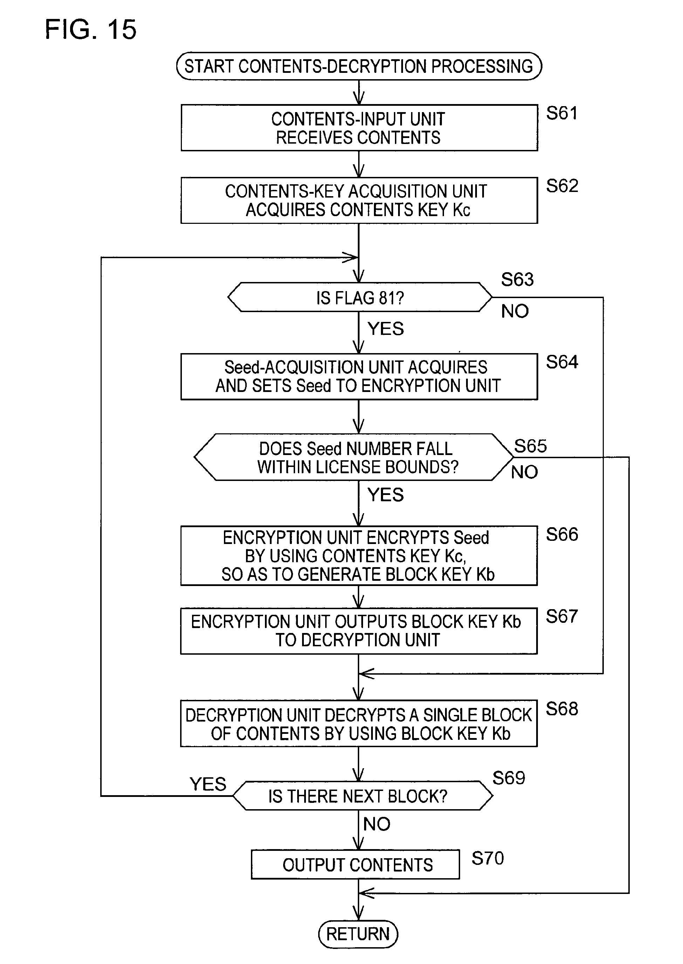

The information-processing system further includes a third encryption section such as an encryption unit 333 shown in Fig. 8 for performing processing corresponding to step S66 shown in Fig. 15. The third encryption section generates the second key for each of the second units of information by encrypting the number stored in the storage section by using the first key.

The information-processing system further includes a decryption section such as a decryption unit 303 shown in Fig. 8 for performing processing corresponding to step S68 shown in Fig. 15. The decryption section decrypts each of the first units of information that are encrypted and stored in the storage section by using the second key.

There is provided a first program for processing information, where the first program makes a computer execute the step of dividing the information such as contents into predetermined units of information, that is, first units of information including a picture I, a picture P, and/or a picture B, for example. This step corresponds to step S32 shown in Fig. 10, for example.

The first program further makes the computer execute the step of generating a single number (e.g., a Seed) for a single of second unit of information (e.g., a single GOP) including the first units of information. This step corresponds to step S34 and/or step S43 shown in Fig. 10, for example.

The first program further makes the computer execute the step of generating a first key such as a contents key Kc used for encrypting each of the numbers generated at the number-generation step. This step corresponds to step S33 shown in Fig. 10.

The first program further makes the computer execute the step of performing first encryption, so as to generate a second key such as a block key Kb for each of the second units of information by encrypting the number generated for each of the second units of information by using the first key. This step corresponds to step S35 shown in Fig. 10, for example.

The first program further makes the computer execute the step of performing second encryption, so as to encrypt each of the first units of information by using the second key. This step corresponds to step S37 shown in Fig. 10, for example.

The first program further makes the computer execute the step of performing control on storage of the first units of information encrypted at the second encryption step, the numbers, and the first keys. This step corresponds to step S15 shown in Fig. 9, for example.

The first program further makes the computer execute the step of performing third encryption, so as to generate the second key for each of the second units of information by encrypting the number that was stored under the control performed at the storage-control step by using the first key. This step corresponds to step S66 shown in Fig. 15, for example.

The first program further makes the computer execute the step of decrypting each of the first units of information that are encrypted and stored under the control performed at the storage-control step by using the second key generated at the third-encryption step. This step corresponds to step S68 shown in Fig. 15, for example.

There is provided a first information-processing apparatus for encrypting information, such as the personal computer 11 including the encryption unit 207, as shown in Fig. 3.

The first information-processing apparatus includes the unit-division section such as the block-division unit 252 shown in Fig. 7 for performing the processing corresponding to step S32 shown in Fig. 10. The unit-division section divides the information such as contents into predetermined units of information, that is, the first units of information including the picture I, the picture P, and/or the picture B, for example.

The first information-processing apparatus further includes the number-generation section, such as the Seed-generation unit 282 shown in Fig. 7 for performing processing corresponding to step S34 and/or step S43 shown in Fig. 10. The number-generation section generates a single number for each of the second units of information (e.g., a single GOP) including the first units of information.

The first information-processing apparatus further includes the key-generation section such as the contents-key generation unit 281 shown in Fig. 7 for performing processing corresponding to step S33 shown in Fig. 10. The key-generation section generates the first key such as the contents key Kc used for encrypting each of the numbers generated by the number-generation section.

The first information-processing apparatus further includes the first encryption section such as the encryption unit 283 shown in Fig. 7 for performing processing corresponding to step S35 shown in Fig. 10. The first encryption section generates the second key such as the block key Kb for each of the second units of information by encrypting the number generated for each of the second units of information by using the first key.

The first information-processing apparatus further includes the second encryption section such as the encryption unit 254 shown in Fig. 7 for performing processing corresponding to step S37 shown in Fig. 10. The second encryption section encrypts each of the first units of information by using the second key generated by the first encryption section.

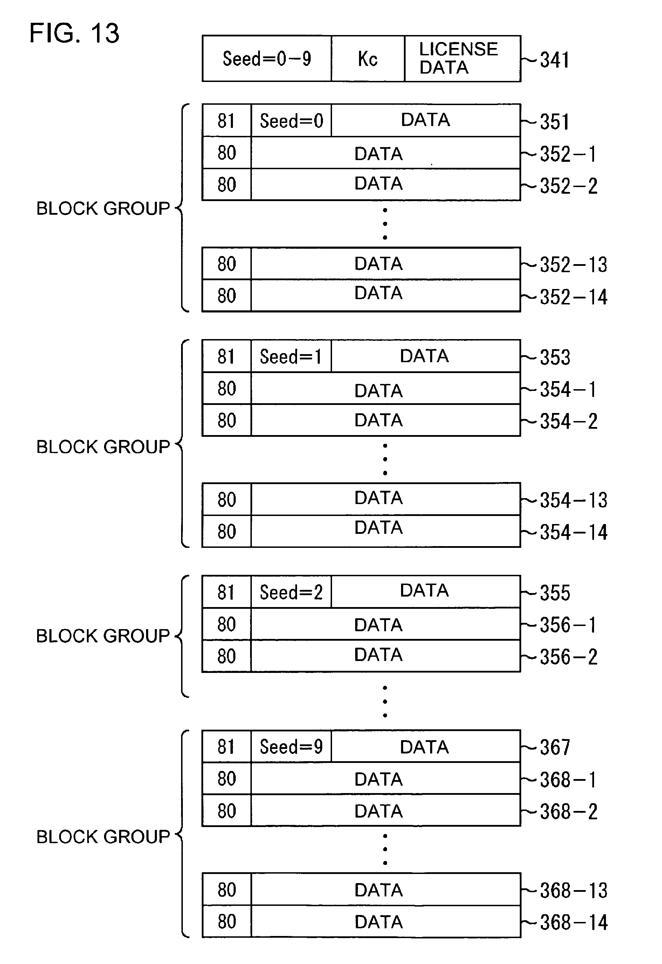

The first information-processing apparatus can further include a storage section such as a storage unit 204 shown in Fig. 3 for performing processing corresponding to step S15 shown in Fig. 9. The storage section stores the second unit of information including the first units of information encrypted by the second encryption section and the number generated for each of the second units of information so that the second unit of information and the number are correlated to each other. For example, the storage section stores the second unit of information and the number generated therefor, as is the case with groups of a block 351 and blocks 352-1 to 352-14 shown in Fig. 13. Further, the storage section stores the first key, as is the case with license data 341 shown in Fig. 13.

The first unit of information of the information-processing apparatus denotes any one of the pictures I, B, and P. Further, the second unit of information denotes a single group of pictures (GOP) including a plurality of the above-described pictures.

The unit-division section divides the information into the pictures, as is the case with step S32 shown in Fig. 10, for example.

The number-generation section generates the single number for each of the GOPs, as is the case with step S34 and/or step S43 shown in Fig. 10, for example.

The first encryption section generates the second key for each of the GOPs by encrypting the number by using the first key, as is the case with step S35 shown in Fig. 10, for example.

The second encryption section encrypts each of the pictures in the GOP by using the second key, as is the case with step S37 shown in Fig. 10, for example.

The first information-processing apparatus can further include a license-generation section such as a license-processing unit 211 shown in Fig. 3 for performing processing corresponding to step S14 shown in Fig. 9. The license-generation section generates a license relating to the information including at least the number that corresponds to the second unit of information and that permits encryption for decrypting the second unit of information corresponding thereto, and the first key.

The storage section stores the second unit of information including the first units of information that are encrypted by the second encryption section and the number generated for the second units of information so that the second unit of information and the number are correlated to each other. Further, the storage section stores the license such as the license 341 shown in Fig. 13. The license includes at least the first key generated by the license-generation section.

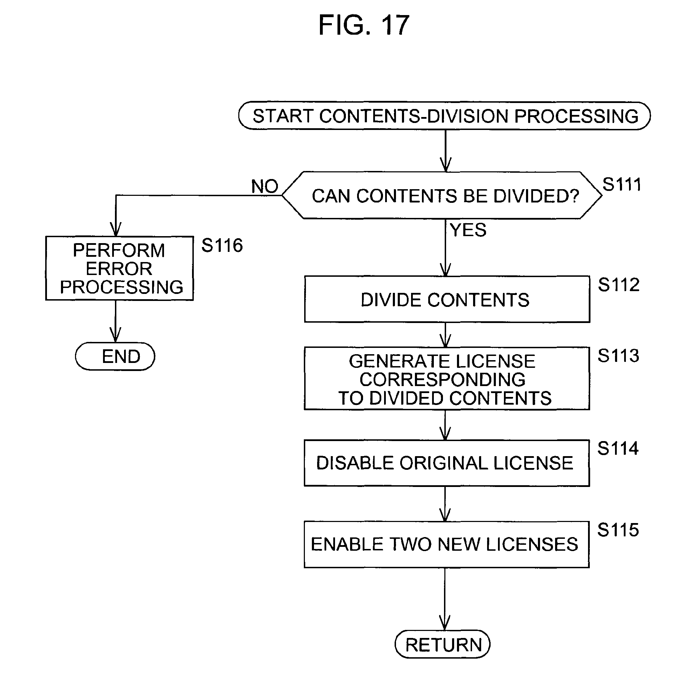

The first information-processing apparatus can further include an information-division section for dividing the information that is encrypted according to an instruction transmitted from a user. The information-division section can be a division unit 209 shown in Fig. 3 for performing processing corresponding to step S112 shown in Fig. 17, for example.

The license-generation section generates the license corresponding to each of the divided units of information based on the information divided by the information-division section and the license stored in the storage section. This processing corresponds to steps 113 to 115 shown in Fig. 17, for example.

There is provided a first information-processing method used for an information-processing apparatus that encrypts information, where the information-processing apparatus may be the personal computer 11 having the encryption unit 207 shown in Fig. 3, for example. The information-processing method includes the step of dividing the information such as contents into predetermined units of information, that is, the first units of information including the picture I, the picture P, and/or the picture B, for example. This step corresponds to step S32 shown in Fig. 10, for example.

The first information-processing method further includes the step of generating the single number for each of the second units of information (e.g., the single GOP) including the first units of information. This step corresponds to step S34 and/or step S43 shown in Fig. 10, for example.

The first information-processing method further includes the step of generating the first key such as the contents key Kc used for encrypting each of the numbers generated at the number-generation step. This step corresponds to step S33 shown in Fig. 10.

The first information-processing method further includes the step of performing the first encryption, so as to generate the second key such as the block key Kb for each of the second units of information by encrypting the number generated for each of the second units of information by using the first key. This step corresponds to step S35 shown in Fig. 10, for example.

The first information-processing method further includes the step of performing the second encryption, so as to encrypt each of the first units of information by using the second key. This step corresponds to step S37 shown in Fig. 10, for example.

There is provided a second program for encrypting information. The second program makes a computer execute the step of dividing the information such as contents into predetermined units of information, that is, the first units of information including the picture I, the picture P, and/or the picture B, for example. This step corresponds to step S32 shown in Fig. 10, for example.

The second program further makes the computer execute the step of generating the single number for the second unit of information (e.g., the single GOP) including the first units of information. This step corresponds to step S34 and/or step S43 shown in Fig. 10, for example.

The second program further makes the computer execute the step of generating the first key such as the contents key Kc used for encrypting each of the numbers generated at the number-generation step. This step corresponds to step S33 shown in Fig. 10.

The second program further makes the computer execute the step of performing the first encryption, so as to generate the second key such as the block key Kb for each of the second units of information by encrypting the number generated for each of the second units of information by using the first key. This step corresponds to step S35 shown in Fig. 10, for example.

The second program further makes the computer execute the step of performing the second encryption, so as to encrypt each of the first units of information by using the second key. This step corresponds to step S37 shown in Fig. 10, for example.

The second program can further include the step of exerting control for storing the second unit of information including the first units of information encrypted at the second encryption step and the number generated for each of the second units of information in the storage section so that the second unit of information and the number are correlated to each other. For example, the storage section stores the second unit of information and the number generated therefor, as is the case with the groups of the block 351 and the blocks 352-1 to 352-14 shown in Fig. 13. Further, under the above-described control, the storage section stores the first key, as is the case with the license data 341 shown in Fig. 13. The above-described storage-control step corresponds to step S15 shown in Fig. 9, for example.

The first unit of information of the program can denote any one of the pictures I, B, and P. The second unit of information denotes a single GOP including a plurality of the pictures.

The information is divided into the pictures, at the unit-division step corresponding to step S32 shown in Fig. 10, for example.

The single number is generated for each of the GOPs, at the number-generation step corresponding to step S34 and/or step S43 shown in Fig. 10, for example.

The second key is generated for each of the GOPs by encrypting the number by using the first key, at the first-encryption step corresponding to step S35 shown in Fig. 10, for example.

The plurality of pictures included in the GOPs is encrypted by using the second keys, respectively, at the second encryption step corresponding to step S37 shown in Fig. 10, for example.

The second program can further include the step of generating a license relating to the information. The license includes at least the number that corresponds to the second unit of information and that permits encryption for decrypting the second unit of information corresponding thereto, and the first key. This step corresponds to step S14 shown in Fig. 9, for example.

At the storage-control step, control is exerted so that the storage section stores the second unit of information including the plurality of first units of information that is encrypted at the second encryption step and the number generated for the second unit of information so that the second unit of information and the number are correlated to each other. Further, under the above-described control, the storage section stores the license such as the license data 341 shown in Fig. 13. The license includes at least the first key generated at the license-generation step.

The second program can further include the step of dividing the information that is encrypted according to the instruction transmitted from the user. The above-described information-division step corresponds to step S112 shown in Fig. 17, for example.

At the license-generation step, the license corresponding to each of the divided units of information is generated, based on the information divided at the information-division step and the license stored under the control exerted at the storage-control step. This license-generation step corresponds to steps 113 to 115 shown in Fig. 17, for example.

There is provided a second information-processing apparatus such as the personal computer 11 having the decryption unit 208, as shown in Fig. 3, for example. In the second information-processing apparatus, the information is divided into the predetermined units of information, that is, the first units of information including the picture I, the picture P, and/or the picture B, for example. Further, the single number (e.g., the Seed) generated for the second unit of information (e.g., a single GOP) including the first units of information is encrypted by using the first key such as the contents key Kc that is generated for encrypting the single number.

The second information-processing apparatus includes a number-acquisition section such as a Seed-acquisition unit 332 shown in Fig. 8 for performing processing corresponding to step S64 shown in Fig. 15. The number-acquisition section acquires the number generated for each of the second units of information.

The second information-processing apparatus further includes a key-acquisition section such as a contents-key acquisition unit 331 shown in Fig. 8 for performing processing corresponding to step S62 shown in Fig. 15. The key-acquisition section acquires the first key used for encrypting each of the numbers acquired by the number-acquisition section.

The second information-processing apparatus further includes an encryption section such as an encryption unit 333 shown in Fig. 8 for performing processing corresponding to step S66 shown in Fig. 15. The encryption section generates the second key for each of the second units of information by encrypting the number acquired by the number-acquisition section by using the first key acquired by the key-acquisition section.

The second information-processing apparatus further includes a decryption section such as a decryption unit 303 shown in Fig. 8 for performing processing corresponding to step S68 shown in Fig. 15. The decryption section decrypts each of the encrypted first units of information included in the second unit of information by using the second key generated by the encryption section.

The first unit of information of the second information-processing apparatus denotes any one of the pictures I, B, and P. Further, the second unit of information denotes a single GOP including a plurality of the above-described pictures. The decryption section decrypts each of the plurality of pictures included in the GOP by using the second key. The decryption corresponds to step S68 shown in Fig. 15, for example.

The information of the second information-processing apparatus can further include a license relating to the information. The license may be the license data 341 shown in Fig. 13, for example. The license includes at least the number that corresponds to the second unit of information and that permits encryption for decrypting the second unit of information corresponding thereto, and the first key.

There is provided a second information-processing method used for the information-processing apparatus such as the personal computer 11 having the decryption unit 208 shown in Fig. 3. In this information-processing apparatus, the information is divided into the predetermined units of information, that is, the first units of information including the picture I, the picture P, and/or the picture B, for example. Further, the single number (e.g., the Seed) generated for the second unit of information (e.g., a single GOP) including the first units of information is encrypted by using the first key such as the contents key Kc generated for encrypting the number. Subsequently, each of the encrypted first units of information is decrypted by using the second key such as the block key Kb generated for each of the second units of information.

The second information-processing method includes the step of acquiring the number generated for each of the second units of information. This step corresponds to step S64 shown in Fig. 15, for example.

The second information-processing method further includes the step of acquiring the first key for encrypting each of the numbers acquired at the number-acquisition step. This step corresponds to step S62 shown in Fig. 15, for example.

The second information-processing method further includes the step of generating the second key for each of the second units of information by encrypting the number acquired at the number-acquisition step by using the first key acquired at the key-acquisition step. This step corresponds to step S66 shown in Fig. 15, for example.

The second information-processing method further includes the step of decrypting each of the decrypted first units of information included in the second unit of information by using the second key generated at the encryption step. This step corresponds to step S68 shown in Fig. 15, for example.

There is provided a third a program wherein the information is divided into the predetermined units of information, that is, the first units of information including the picture I, the picture P, and/or the picture B, for example. Further, a single number (e.g., the Seed) generated for the second unit of information (e.g., a single GOP) including the first units of information is encrypted by using the first key such as the contents key Kc generated for encrypting the number. Subsequently, each of the encrypted first units of information is decrypted by using the second key such as the block key Kb generated for each of the second units of information. The third program makes a computer execute the following processing.

The processing includes the step of acquiring the number generated for each of the second units of information. The above-described step corresponds to step S64 shown in Fig. 15, for example.

The processing further includes the step of acquiring the first key used for encrypting each of the numbers acquired at the number-acquisition step. The above-described step corresponds to step S62 shown in Fig. 15, for example.

The processing further includes the step of generating the second key for each of the second units of information by encrypting the number acquired at the number-acquisition step by using the first key acquired at the key-acquisition step. This step corresponds to step S66 shown in Fig. 15, for example.

The processing further includes the step of decrypting each of the encrypted first units of information included in the second unit of information by using the second key generated at the encryption step. This step corresponds to step S68 shown in Fig. 15, for example.

In the case of the third program, the first unit of information can denote any one of the pictures I, B, and P. Further, the second unit of information can denote a single GOP including a plurality of the above-described pictures. At the decryption step, each of the plurality of pictures included in the GOP is decrypted by using the second key. The above-described decryption step corresponds to step S68 shown in Fig. 15, for example.

In the case of the third program, the information further includes a license relating thereto. The license can be the license data 341 shown in Fig. 13, for example. The license includes at least the number that corresponds to the second unit of information and that permits encryption for decrypting the second unit of information corresponding thereto, and the first key.

Embodiments of the present invention will now be described with reference to the accompanying drawings.

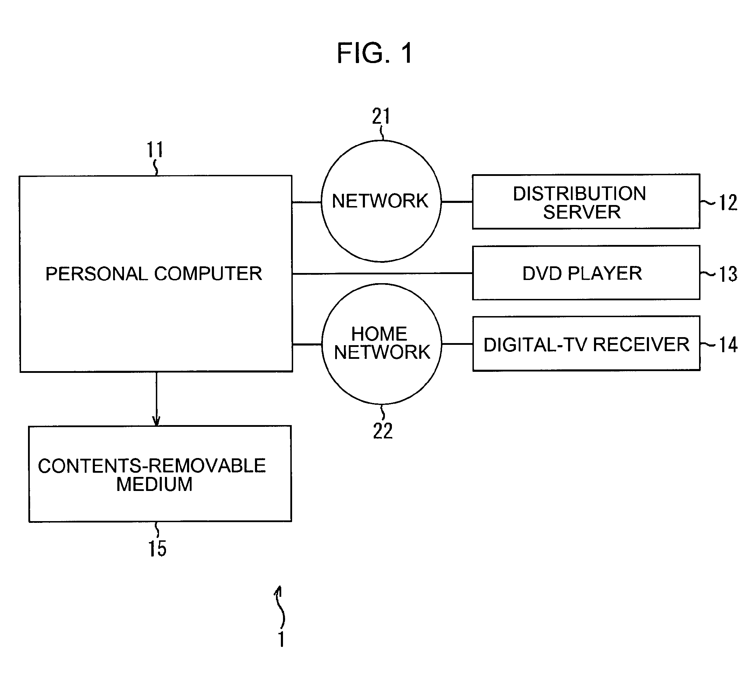

Fig. 1 shows the configuration of an entire information-processing system according to an embodiment of the present invention.

The personal computer (PC) 11 is connected to a distribution server 12 via a network 21 for receiving contents or contents data transmitted from the distribution server 12. The PC 11 also receives contents transmitted from a digital-versatile-disc (DVD) player 13 for reproducing a DVD. Further, the PC 11 is connected to a digital-TV receiver 14 including a digital-TV tuner via a home network 22 that performs communications by using a digital transmission content protection Internet protocol (DTCP/IP). The PC 11 receives contents transmitted from the digital-TV receiver 14.

That is to say, the PC 11 receives contents transmitted from the distribution server 12, the DVD player 13, and/or the digital-TV receiver 14.

Further, a contents-removable medium 15 is connected and/or mounted on the PC 11 so that the PC 11 stores the contents transmitted from the distribution server 12, the DVD player 13, and/or the digital-TV receiver 14 in the contents-removable medium 15. At the same time, the PC 11 encrypts the contents in an appropriate format so that the contents can be stored in the contents-removable medium 15. For example, if the contents transmitted from the distribution server 12 are encrypted, the PC 11 decrypts the encrypted contents and obtains plain text. Then, the PC 11 encrypts the obtained plain text in an appropriate format so that the encrypted contents can be stored in the contents-removable medium 15 and stores the encrypted contents in the contents-removable medium 15.

The contents-removable medium 15 is a recording medium including Hi-MD™, MemoryStick™ (MS), and so forth, and reproduced by a Hi-MD player, an MS player, and/or the PC 11. Each of the above-described special-purpose devices such as the Hi-MD player and the MS player is small in size and set so that the processing capacity thereof is lower than that of the PC 11, so as to maintain low power consumption. Hereinafter, this embodiment shows an encryption method that allows a device whose processing capacity is comparatively lower than that of the PC 11 to easily decrypt the encrypted contents stored in the contents-removable medium 15. The encryption method further allows the device to safely distribute contents.

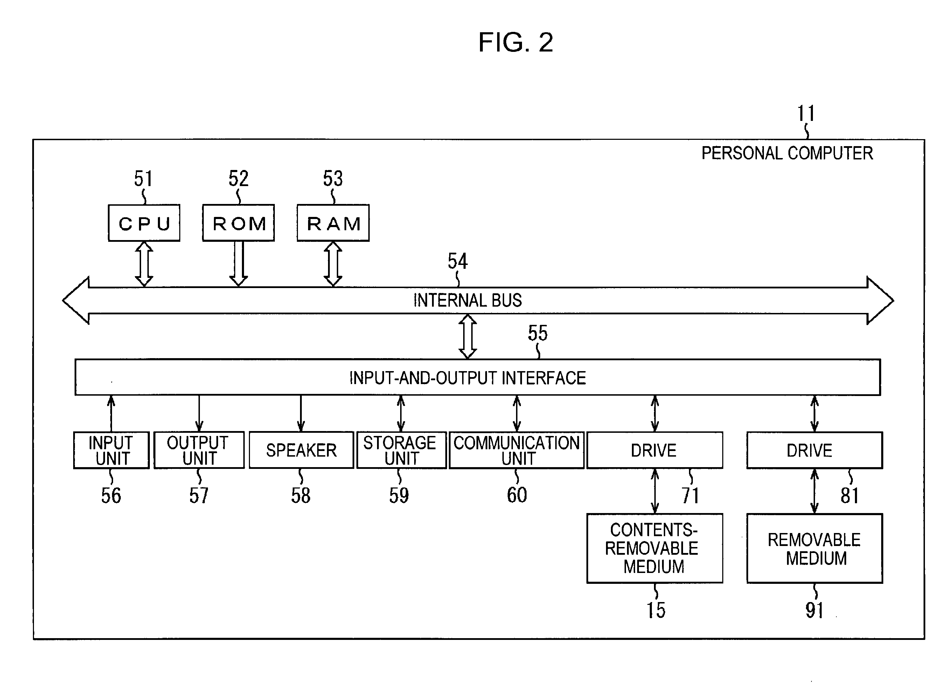

Fig. 2 is a block diagram illustrating an example hardware configuration of the PC 11 shown in Fig. 1.

A central-processing unit (CPU) 51, a read-only memory (ROM) 52, and a random-access memory (RAM) 53 are connected to one another via an internal bus 54. An input-and-output interface 55 is also connected to the internal bus 54.

The CPU 51 executes various types of processing according to a program stored in the ROM 52 and/or a program loaded from a memory unit 59 into the RAM 53. The RAM 53 also stores data necessary for the CPU 51 to execute the various types of processing.

The input-and-output interface 55 is connected to an input unit 56 including a keyboard, a mouse, and so forth, a display unit 57 including, a liquid-crystal display (LCD), a cathode-ray tube (CRT), and so forth, a speaker 58, a storage unit 59 including a hard disk or the like, a communication unit 60 including a modem, a terminal adapter, and so forth, and a drive 71. The communication unit 60 performs communications via various types of networks including a phone line and/or a CATV line. The contents-removable medium 15 shown in Fig. 1 is mounted on the drive 71 so that the contents data stored in the contents-removable medium 15 is read, or contents data is stored in the contents-removable medium 15.

A drive 81 is connected to the input-and-output interface 55, as required. Further, a removable medium 91 including a magnetic disk, an optical disk, a magnetooptical disk, a semiconductor memory, and so forth is inserted in the drive 81, as required. A computer program read from the removable medium 91 is installed into the storage unit 59, as required.

Fig. 3 is a block diagram illustrating an example functional configuration of the PC 11 shown in Fig. 2. The CPU 51 of the PC 11 shown in Fig. 2 achieves the above-described functional configuration by executing the various programs stored in the storage unit 59.

In Fig. 3, the PC 11 includes a data-input unit 201, an operation-input unit 202, a main-control unit 203, a storage unit 204, an encoding unit 205, a decoding unit 206, an encryption unit 207, a decryption unit 208, a division unit 209, a coupling unit 210, a license-processing unit 211, and a data-output unit 212.

The data-input unit 201 receives data transmitted thereto and transmits the received data to the main-control unit 203. For example, the data-input unit 201 receives contents (contents data) transmitted from the distribution server 12 and transmits the contents data to the main-control unit 203.

The operation-input unit 202 receives an operation input transmitted from the user and transmits a control signal according to the user's operation input, that is, a signal according to the user's instruction to the main-control unit 203.

The main-control unit 203 controls each of the above-described units. The storage unit 204 stores various types of data. The storage unit 204 can be the contents-removable medium 15 shown in Fig. 3, for example, so as to store contents.

The encoding unit 205 encodes contents in predetermined format. For example, the encoding unit 205 encodes image data of the contents based on moving-picture experts group (MPEG) standards. Further, the encoding unit 205 encodes speech data of the contents according to an audio encoder provided in the encoding unit 205.

The decoding unit 206 decodes the encoded contents according to a method corresponding to the encoding method. For example, where the image data of the contents is encoded based on the MPEG standards, the decoding unit 205 decodes the encoded data by using a method on the basis of the MPEG standards. Further, the decoding unit 206 decodes the speech data of the contents based on an audio decoder provided in the decoding unit 206. In the case of Fig. 3, the encoding unit 205 and the decoding unit 206 correspond to each other so that the contents encoded by the encoding unit 205 are decoded by the decoding unit 206.

The encryption unit 207 encrypts contents based on encryption standards such as an advanced encryption standard (AES), a data encryption standard (DES), for example. The details of the encryption unit 207 will be described later with reference to Fig. 7.

The decoding unit 208 decodes the encrypted contents based on the encryption standards including the AES and the DES, for example. The details of the decoding unit 208 will be described later with reference to Fig. 8.

The division unit 209 divides contents such as the contents encrypted by the encryption unit 207.

The coupling unit 210 couples divided contents divided into at least two portions, such as the contents divided by the division unit 209.

The license-processing unit 211 performs processing relating to the license of contents. For example, the license-processing unit 211 generates the license of contents and/or reads a license added to contents, and performs various types of processing.

The data-output unit 212 externally transmits data under the control of the main-control unit 203. For example, the data-output unit 212 externally transmits contents data, makes the display unit 57 shown in Fig. 2 produce an image, and makes the speaker 58 generate speech.

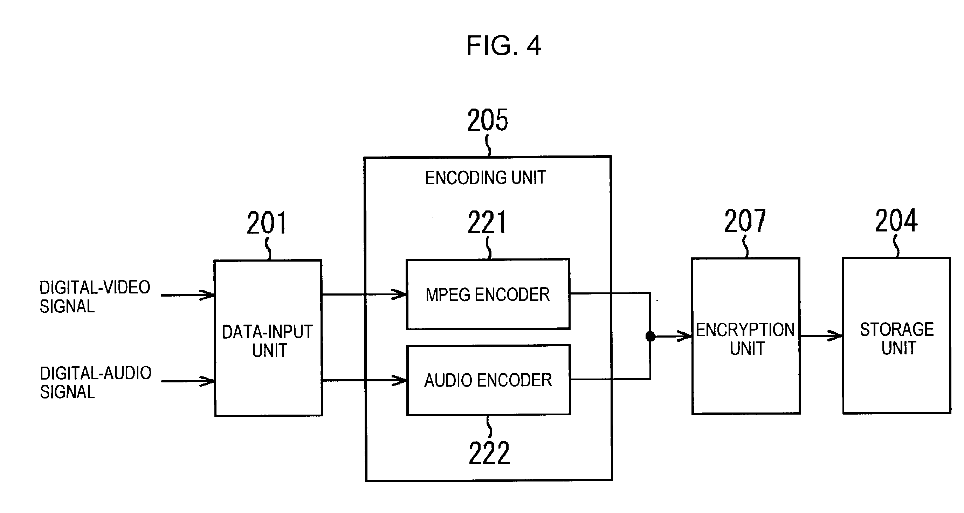

Fig. 4 schematically shows the flow of example processing procedures performed for storing contents or contents data in the storage unit 204, where the contents or contents data is transmitted to the data-input unit 201 shown in Fig. 3.

Upon receiving a digital-video signal and a digital-audio signal, that is, contents, the data-input unit 201 transmits the digital-video signal and the digital-audio signal to the encoding unit 205 including an MPEG encoder 221 and an audio encoder 222. The MPEG encoder 221 encodes the digital-video signal based on the MPEG (e.g., MPEG2, or MPEG4) standards and the audio encoder 222 encodes the digital-audio signal.

The contents data encoded by the MPEG encoder 221 and the audio encoder 222 of the encoding unit 205 is transmitted to the encryption unit 207. The encryption unit 207 encrypts the encoded contents data according to a method of an embodiment of the present invention and transmits the encrypted contents data to the storage unit 204 so that the contents data is stored therein.

Thus, the transmitted contents data is encoded, encrypted, and stored in the storage unit 204.

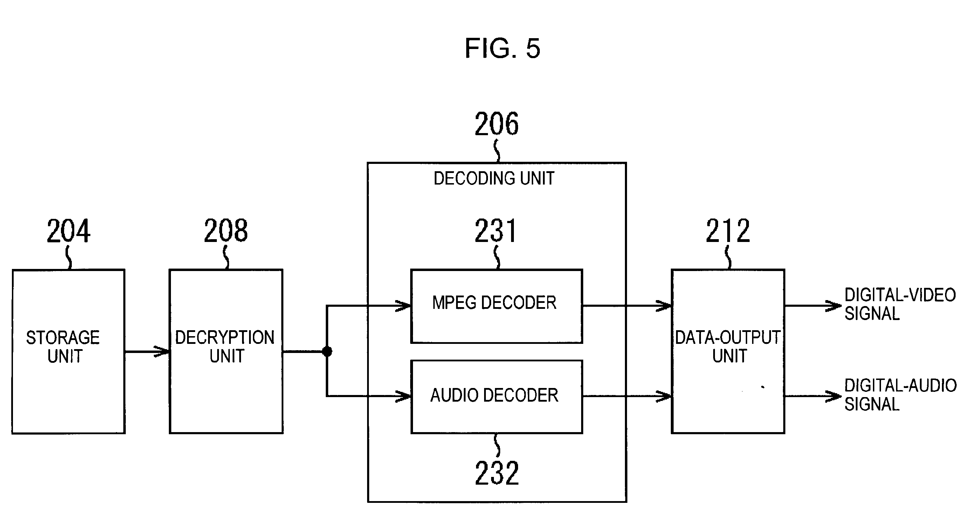

Next, Fig. 5 schematically shows the flow of example processing procedures performed for reproducing the contents, that is, the encoded and encrypted contents stored in the storage unit 204. The above-described processing corresponds to the processing shown in Fig. 4.

The encoded and encrypted contents are read from the storage unit 204 and transmitted to the decoding unit 208. The decoding unit 208 decrypts the encrypted contents and obtains plan text, that is, encoded contents. Then, the decryption unit 208 transmits the encoded contents to the decoding unit 206. The decoding unit 206 includes an MPEG decoder 231 and an audio decoder 232. The MPEG decoder 231 decodes a digital-video signal encoded based on the MPEG (e.g., MPEG 2 or MPEG4) standards. The audio decoder 232 decodes an encoded digital-audio signal.

The contents data decoded by the MPEG decoder 231 and the audio decoder 232 is transmitted to the data-output unit 212. The data-output unit 212 externally transmits and reproduces the digital-video signal and the digital-audio signal.

Thus, the contents data stored in the storage unit 204 is decrypted, decoded, and reproduced.

Without being limited to the above-described embodiment, an analog-video signal and an analog-audio signal can be used in place of the digital-video signal and the digital-audio signal.

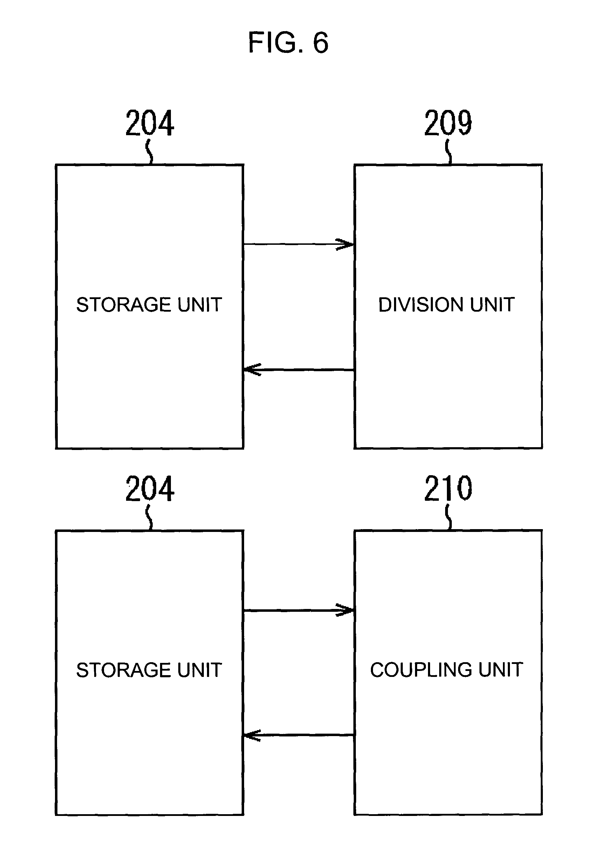

Next, Fig. 6 shows an example of how contents are divided and coupled to each other.

As has been described, the contents stored in the storage unit 204 are encoded and decrypted, as shown in Fig. 4. The division unit 209 reads and divides the contents stored in the storage unit 204. That is to say, the division unit 209 reads the contents from the storage unit 204 and divides the read contents into two portions according to an instruction transmitted from the user, for example. Here, the instruction denotes an instruction issued by the user via the operation-input unit 202. Then, the division unit 209 stores the divided contents into the storage unit 204.

As described above, the storage unit 204 often stores the divided contents, that is, the encoded and encrypted contents. The coupling unit 210 reads the divided contents stored in the storage unit 204, as shown in Fig. 6. For example, the coupling unit 210 reads the contents divided into the portions by the division unit 209 from the storage unit 204 according to the instruction generated by the user via the operation-input unit 202 and couples the two portions to each other and generates a single unit of contents data. Then, the coupling unit 210 stores the coupled contents data in the storage unit 204.

Hereinafter, this embodiment will be described, based on the premise that the contents data include a digital-video signal. However, a digital-audio signal can also be used in place of the digital-video signal.

Fig. 7 is a block diagram illustrating an example functional configuration of the encryption unit 207 shown in Fig. 3.

The encryption unit 207 includes a contents-input unit 251, a block-division unit 252, a block-key generation unit 253, an encryption unit 254, a data-addition unit 255, and a contents-output unit 256. The block-key generation unit 253 includes a contents-key generation unit 281, a Seed-generation unit 282, and an encryption unit 283.

The contents-input unit 251 receives contents transmitted thereto. For example, the contents-input unit 251 receives a digital-video signal transmitted thereto, as contents. Since the contents transmitted to the encryption unit 207 is encoded, as shown in Fig. 4, the contents-input unit 251 can receive a plurality of the GOPs on the basis of the MPEG2 standards, for example.

The block-division unit 252 divides contents into at least two blocks. For example, the 252 divides contents including digital-video signals into at least two pictures. More specifically, where the contents are encoded based on the MPEG2 standards, the block-division unit 252 divides the GOP of the contents into at least two blocks, namely, the picture I (an intra picture), the picture P (a predictive picture), the picture B (a bidirectionally predictive picture), and so forth. That is, a single picture constitutes a single block in this embodiment. The block-division unit 252 transmits the blocks obtained by the division, that is, the pictures I, P, and B to the contents-key generation unit 281, the Seed-generation unit 282, and the encryption unit 254.

The block-key generation unit 253 generates a block key for encrypting each of the above-described blocks. For example, the block-key generation unit 253 generates a block key used for each of the GOPs, that is, a predetermined number of the blocks forming the contents. That is to say, the block-key generation unit 253 generates the block key for each of the blocks (GOPs).

The contents-key generation unit 281 generates a contents key KC by using a random-number generator provided therein, where the contents key KC is used for each unit of contents data transmitted to the contents-input unit 251. That is to say, the contents-key generation unit 281 generates the contents key Kc used throughout the single unit of contents data. For example, the contents-key generation unit 281 generates the single contents key Kc used throughout a single movie by using the random-number generator. For example, upon receiving the first one block of predetermined contents transmitted from the block-division unit 252, the contents-key generation unit 281 generates the contents key Kc by using the random-number generator provided therein. The contents-key generation unit 281 transmits the generated contents key Kc to the encryption unit 283 and the license-processing unit 211.

The Seed-generation unit 282 generates the Seed, that is, a number functioning as the seed of the block key Kb according to a block such as the picture I transmitted from the block-division unit 252. More specifically, the Seed-generation unit 282 generates the Seed for every predetermined number of blocks. For example, the Seed-generation unit 282 generates a single Seed for every fifteen blocks transmitted from the block-division unit 252. In other words, the Seed-generation unit 282 generates the single Seed when the block transmitted thereto is the picture I and generates no Seeds when the block transmitted thereto is either the picture P or the picture B.

That is to say, the Seed-generation unit 282 generates a single Seed for each of the GOPs, that is, a predetermined number of blocks and transmits the generated Seed to the encryption unit 283. The Seed-generation unit 282 includes a counter and increments the counter by one for every predetermined number of blocks. Then, the Seed-generation unit 282 transmits the count value to the encryption unit 283. In the case where an audio signal is processed, the Seed-generation unit 282 generates a single Seed for every predetermined number of sound units, for example, ten sound units corresponding to a time period of one-half second or more. The Seed-generation unit 282 transmits the generated Seed to the encryption unit 283, the data-addition unit 255, and the license-processing unit 211.

Further, in this embodiment, the Seed-generation unit 282 increments the counter provided therein by one for every predetermined number of blocks. However, the Seed-generation unit 282 may randomly generate random numbers instead of incrementing the counter by one. This is because the value of the Seed generated by the Seed-generation 282 may require no rules, since the Seed is added to the encrypted contents. This processing corresponds to step S39 shown in Fig. 10 that will be described later.

The encryption unit 283 encrypts the Seed transmitted from the Seed-generation unit 282 by using the contents key Kc generated by the contents-key generation unit 281, so as to generate the block key Kb. That is to say the encryption unit 283 generates the block key Kb by using the contents key Kc and the Seed. The encryption unit 283 encrypts the Seed by using the contents key Kc according to the AES and/or the DES. Thus, the Seed functions, as a seed for generating the block key Kb. Further, the contents key Kc functions, as a key for encrypting the Seed. The block-key generation unit 253 generates the block key Kb for every GOP, since the Seed-generation unit 282 generates the Seed for every GOP. The encryption unit 283 transmits the encrypted and generated block key Kb to the encryption unit 254.

The encryption unit 254 encrypts the block of contents transmitted from the block-division unit 252 by using the block key Kb transmitted from the encryption unit 283 and transmits the encrypted block to the data-addition unit 255. For example, the encryption unit 254 encrypts a block transmitted thereto by using the block key Kb. The encryption unit 254 performs the above-described encryption according to the AES and/or the DES. The encryption unit 254 changes the type of a key used for encrypting the block for every GOP, since the block-key generation unit 253 generates the block key Kb for every GOP. For example, upon receiving the picture I (a single block) transmitted from the block-division unit 252, the encryption unit 254 encrypts the picture I by using the block key Kb transmitted from the encryption unit 283. Next, upon receiving the picture B transmitted from the block-division unit 252, the encryption unit 254 encrypts the picture B by using the same block key Kb as that used for encrypting the picture I. The block key Kb is used until the next picture B is transmitted to the encryption unit 254. Namely, when a single GOP includes fifteen pictures, the block key Kb is changed for every fifteen pictures.

The data-addition unit 255 adds data according to the encrypted block and the Seed transmitted from the Seed-generation unit 282. For example, the data-addition unit 255 adds a flag and a Seed to the encrypted block or contents. More specifically, where no Seed is added to the encrypted block, that is to say, where the encrypted block does not include the picture I, the data-addition unit 255 adds a flag whose value is eighty to the encrypted block. Where a Seed is added to the encrypted block, that is to say, where the encrypted block includes the picture I, the data-addition unit 255 adds a flag whose value is eighty-one to the encrypted block.

The contents-output unit 256 externally transmits the contents with the flag and Seed that are added thereto by the data-addition unit 255.

The license-processing unit 211 performs license processing based on the contents key Kc and the Seed that are transmitted from the contents-key generation unit 281 and the Seed-generation unit 282. For example, data on the reproduction number, data on the use condition, and data indicating whether or not the contents can be divided are transmitted to the license-processing unit 211, for example, a license is transmitted from the distribution server 12 to the license-processing unit 211. Subsequently, the license-processing unit 211 generates the license according to the above-described data, the contents key Kc, and the Seed. Hereinafter, data on at least the reproduction number, the use conditions, and whether or not the contents can be divided is referred to as license data. That is to say, the license at least includes data on the contents key Kc, data on the Seed bounds in which the license is valid, and the license data. The generated license is added to the contents transmitted from the contents-output unit 256, that is, the contents that include the flag and the Seed that are added thereto and that are encrypted for each block by using the block key Kb. Then, the generated license is stored.

In this embodiment, the license includes at least the data on the contents key Kc, the data on the Seed bounds in which the license is valid, and the license data. However, the data on the contents key Kc and the data on the Seed bounds in which the license is valid can be added to the header of the encrypted block, that is, the contents, as required.

Thus, in the encryption unit 207 shown in Fig. 7, the contents are divided into at least two blocks, the Seed is generated for every predetermined number of the blocks obtained by the division, the Seed is encrypted and determined to be the block key Kb by using the contents key Kc, and each of the blocks is encrypted by using the block key Kb. Then, the flag and the Seed are added to the block or contents encrypted by the block key Kb, as required, and externally transmitted. That is to say, the contents that include the flag and the Seed that are added thereto and that are encrypted for each block by using the block key Kb are externally transmitted. Further, the license-processing unit 211 generates the license corresponding to each of the blocks.

Fig. 8 is a block diagram illustrating an example functional configuration of the decoding unit 208 shown in Fig. 3.

The decoding unit 208 includes a contents-input unit 301, a block-key calculation unit 302, a decoding unit 303, and a contents-output unit 304. The block-key calculation unit 302 includes a contents-key acquisition unit 331, a Seed-acquisition unit 332, and an encryption unit 333.

The contents-input unit 301 receives contents transmitted thereto, such as contents that are encrypted for each block and stored in the storage unit 204. The contents-input unit 301 transmits the contents in blocks to the contents-key acquisition unit 331 and the Seed-acquisition unit 332 of the block-key calculation unit 302, and the license-processing unit 211.

The contents-key acquisition unit 331 acquires the contents key Kc from the block, that is, the license included in the contents transmitted from the contents-input unit 301. As has been described, the encryption unit 207 shown in Fig. 7 and the license-processing unit 211 added the contents key Kc to the license of the contents. Therefore, the contents-key acquisition unit 331 acquires the contents key Kc from the contents. The contents-key acquisition unit 331 transmits the acquired contents key Kc to the encryption unit 333.

The Seed-acquisition unit 332 acquires the Seed from the block or contents transmitted from the contents-input unit 301. As described above, the Seed is added for every predetermined number of blocks or GOPs. The Seed-acquisition unit 332 transmits the acquired Seed to the encryption unit 333 and the license-processing unit 211.

The encryption unit 333 encrypts the Seed transmitted from the Seed-acquisition unit 332 by using the contents key Kc transmitted from the contents-key acquisition unit 331. More specifically, the encryption unit 333 calculates the block key Kb by encrypting the Seed by using the contents key Kc. The Seed is used for calculating the block key Kb. The encryption unit 333 transmits the block key Kb generated by the above-described calculation to the decryption unit 303.

Where both the block corresponding to the block key Kb generated by the block-key generation unit 253 shown in Fig. 7 and the block corresponding to the block key Kb generated by the block-key calculation unit 302 shown in Fig. 8 belong to one and the same GOP of predetermined contents, the details of the above-described block keys Kb become identical.

The decryption unit 303 decrypts the contents or blocks transmitted from the contents-input unit 301 by using the block key Kb transmitted from the encryption unit 333. Subsequently, the encrypted contents are decrypted and plain text is obtained. Actually, the plain text is still encoded then. The contents-output unit 304 externally transmits the decrypted contents.

The license-processing unit 211 performs license processing based on the license that is transmitted from the contents-input unit 301, that is, the license added to the contents, and the Seed that is transmitted from the Seed-acquisition unit 332 and that corresponds to a block subjected to the license processing, and so forth. For example, the license-processing unit 211 determines whether or not the block subjected to the license processing falls within the license bounds based on the above-described license, the Seed that is transmitted from the Seed-acquisition unit 332 and that corresponds to a block subjected to the license processing, and so forth.

Thus, upon receiving the contents that are divided in blocks and encrypted, the encryption unit 208 shown in Fig. 8 encrypts the Seed acquired from the block by using the contents key Kc, so as to generate the block key Kb. Further, the block corresponding to the Seed is decrypted by using the block key Kb calculated according to the Seed. Further, the license-processing unit 211 determines whether or not the block can be reproduced according to the license corresponding to the block.

Fig. 9 is a flowchart illustrating processing performed by the PC 11 shown in Fig. 3 for storing contents. This processing is started when the user transmits an instruction to store the contents in the storage unit 204 via the operation-input unit 202.

The data-input unit 201 reads and transmits contents for encryption to the main-control unit 203 according to the user's instruction transmitted via the operation-input unit 202, at step S11. For example, the data-input unit 201 receives contents for encryption transmitted from the distribution server 12, the DVD player 13, or the digital-TV receiver 14 and transmits the contents to the main-control unit 203 according to the user's instruction.

The encoding unit 205 encodes the contents under the control of the main-control unit 203, at step S12. For example, the encoding unit 205 encodes contents based on the MPEG2 standards. Subsequently, the contents include a plurality of GOPs. Each of the GOPs includes three varieties of fifteen pictures, that is, the pictures I, P, and B.

The encryption unit 207 encrypts the contents under the control of the main-control unit 203, at step S13. The details of the processing will be described later with reference to Fig. 10.

The license-processing unit 211 performs the license-addition processing under the control of the main-control unit 203, at step S14. More specifically, the license-processing unit 211 generates the contents key Kc used for encrypting a single unit of contents data, information about the license-valid bounds, that is, the Seed-number bounds, and the license data including at least data on the reproduction number, data on the use condition, and data indicating whether or not the contents can be divided. Then, the license-processing unit 211 adds the above-described data to the encrypted contents. Where the Seed-generation unit 282 generates random values or random numbers, as the Seed, the Seed-number bounds are not sequential and the random values are added to the contents in sequence.

The main-control unit 203 stores the encrypted contents having the license added thereto in the storage unit 204, at step S15, whereby the processing is terminated.

As shown in Fig. 9, the contents are encoded and encrypted. Further, the license is added to the encrypted contents and the contents are stored in the storage unit 204.

Next, the details of the contents encryption corresponding to step S13 shown in Fig. 9 will be described with reference to the flowchart shown in Fig. 10. This processing is performed by the encryption unit 207 shown in Fig. 7 under the control of the main-control unit 203 shown in Fig. 3.

The contents-input unit 251 shown in Fig. 7 receives contents transmitted thereto, at step S31. The contents are read, at step S11 and encoded, at step S12, as shown in Fig. 9. The contents read herein are encoded based on the MPEG standards, for example.

The block-division unit 252 divides contents into blocks, at step S32. For example, where the contents are encoded based on the MPEG2 standards, the block-division unit 252 divides the contents into blocks, where each of the blocks is any one of the pictures I, P, and B. That is to say, the block-division unit 252 divides the contents into pictures. The block-division unit 252 transmits the blocks or pictures obtained by dividing the contents to the contents-key generation unit 281, the Seed-generation unit 282, and the encryption unit 254 on a one-by-one basis.

The contents-key generation unit 281 generates the contents key Kc, at step S33. For example, the contents-key generation unit 281 includes a random-number generator and randomly generates the contents key Kc by using the random-number generator. The contents key Kc is key data that is shared in a single unit of contents and that is used for encrypting the Seed. Upon receiving the first block of the contents transmitted from the contents-input unit 251, the contents-key generation unit 281 generates and transmits the contents key Kc to the encryption unit 283 and the license-processing unit 211. Here, the first block can be the first picture I and/or the license.

The Seed-generation unit 282 sets the Seed value to zero, at step S34. That is to say, the Seed-generation unit 282 initializes the Seed value. The Seed-generation unit 282 transmits the set Seed value to the encryption unit 283 and the license-processing unit 211.

The encryption unit 283 encrypts the Seed value by using the contents key Kc and determines the encryption result to be the block key Kb, at step S35. That is to say, the encryption unit 254 generates the block key Kb by encrypting the Seed value by using the contents key Kc. More specifically, the encryption unit 283 performs calculation, so as to obtain data E (Kc and Seed). Here, the data E (Kc and Seed) indicates that the Seed is encrypted by using the contents key Kc. Here, an expression Kb = E (Kc, Seed) holds.

The encryption unit 283 transmits the generated block key Kb to the encryption unit 254, at step S36.

The encryption unit 254 encrypts a single block of contents by using the block key Kb, at step S37. More specifically, the encryption unit 254 encrypts a single block transmitted from the block-division unit 252 by using the block key Kb. In this embodiment, the single block is the picture I. The encryption unit 254 transmits the encryption result to the data-addition unit 255. In this embodiment, the encryption result denotes the result of encrypting the single block by using the block key Kb.

The data-addition unit 255 determines whether or not the Seed should be added to the block, at step S38. More specifically, where the Seed-value is set, at step S34, or where the Seed value is set, at step S43 that will be described later, the data-addition unit 255 determines that the Seed should be added to the block. For example, where the block encrypted at step S37 is the picture I, the data-addition unit 255 determines that the Seed should be added to the encrypted block.

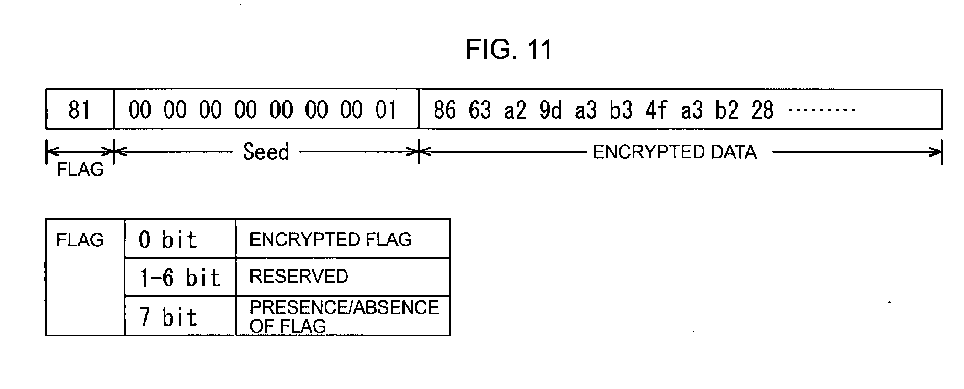

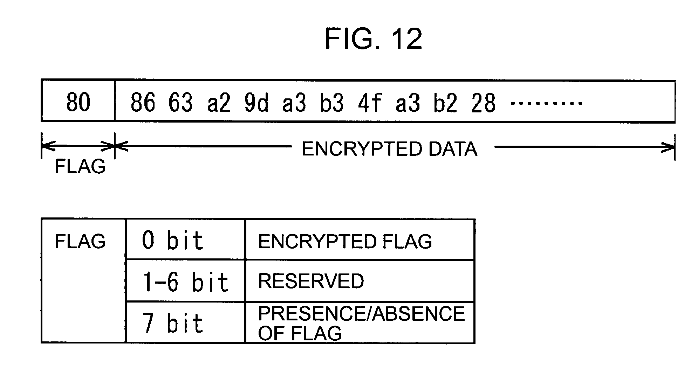

Where it is determined that the Seed should be added, at step S38, that is to say, where the block encrypted at step S37 is the picture I, the data-addition unit 255 sets the flag value to eighty-one and adds the flag and the Seed to the block or the picture I, at step S39. More specifically, the data-addition unit 255 prefixes the encrypted data with "81", as a flag, as shown in Fig. 11. Further, the data-addition unit 255 prefixes the encrypted data with "0000000000000001", as the Seed value. Here, the flag "81" indicates that the encrypted data is prefixed with the Seed. A flag "80" indicates that the encrypted data is not prefixed with the Seed, as will be described later with reference to Fig. 12. In Fig. 11, the encrypted data is shown, as "86 63 a2 ···".

Where it is determined that the encrypted data is not prefixed with the Seed, at step S38, that is to say, where the block encrypted at step S37 is either the picture P or the picture B, the data-addition unit 255 determines the flag to be "80" and prefixes the encrypted data with the flag "80", at step S40. More specifically, the data-addition unit 255 prefixes the encrypted data with "80", as the flag, as shown in Fig. 12. In this drawing, the encrypted data is shown, as "86 63 a2 ···".

Thus, the Seed is added to the encrypted block, as required, and the flag indicating the presence or absence of the Seed is added to the encrypted block, at step S39 and/or step S40.

After step S39 and/or step S40, the block-division unit 252 determines whether or not the next block exists, at step S41. For example, the block-division unit 252 determines whether or not the entire blocks of contents are encrypted. If not, the block-division unit 252 determines that the next block exists.

Where it is determined that the next block exists, at step S41, the block-division unit 252 transmits the next block such as the picture B to the Seed-generation unit 282 and the encryption unit 254.

The Seed-generation unit 282 determines whether not a Seed of the next block should be incremented, at step S42. Here, the next block denotes a block following the block that was encrypted, at step S37. In this embodiment, the Seed should be incremented when the picture I is transmitted to the Seed-generation unit 282, that is to say, the Seed value should be incremented by one. Therefore, the Seed-generation unit 282 determines whether or not the next block is the picture I.

Where it is determined that the Seed of the next block should be incremented, at step S42, that is to say, where the next block is the picture I, the Seed-generation unit 282 performs calculation, as shown by the expression Seed = Seed + 1. That is to say, the Seed-generation unit 282 increments the Seed value by one and sets the Seed to the incremented value. Since the current Seed value is zero, the Seed-generation unit 282 performs calculation, as shown by the expression Seed = 0 + 1 = 1. Then, the Seed-generation unit 282 transmits the Seed = 1 to the encryption unit 283 and the license-processing unit 211.

Where it is determined that the Seed of the next block should be incremented, at step S42, the processing returns to step S35 so that the processing from the step S35 on down is repeated. That is to say, the Seed that was set at step S43 is encrypted by using the contents key Kc, whereby a new block key Kb is generated. Then, the block is encrypted by using the newly-generated block key Kb and a flag is added thereto. Since the Seed is set, at step S43, it is determined that the Seed should be added, at step S38 that will be performed later. That is to say, the flag "81" and the Seed are added to a block in the case where the Seed value is changed and the new Block key KB is generated by the encryption unit 283.

Where it is determined that the Seed of the next block should no be incremented, at step S42, the processing returns to step S37 so that the processing from the step S37 on down is repeated. That is to say, where the Seed is not incremented, the block is encrypted by using the block key Kb that was used for the previous processing. More specifically, where the next block is the picture B, it is determined that the Seed should not be incremented, at step S42, and a single block of the contents, that is, the picture B is encrypted by using the block key Kb that was previously used for encrypting the picture I, at step S37.

Thus, the processing from step S35 to step S43 are repeated until the entire blocks of the contents are encrypted.

If it is determined that the next block does not exist, at step S41, that is to say, if it is determined that the entire blocks of the contents are encrypted, the contents-input unit 256 externally transmits the encrypted data with added data (the flag and the Seed), at step S44. Afterwards, the processing returns to step S13 shown in Fig. 9.

Thus, after step S13, the license-addition processing is performed, at step S14, as shown in Fig. 9. More specifically, the license-processing unit 211 stores the Seed value transmitted, at step S34 and/or step S43, and the value of the contents key Kc transmitted, at step S33 in a license so that the license generation is completed. The license-processing unit 211 receives the reproduction-number data, the use-condition data, and the data indicating whether or not the contents can be divided that are transmitted from a contents-distribution source, such as the distribution server 12. Therefore, the above-described data is determined to be license data. Data on the Seed bounds (where the Seed number is zero to nine, for example) in which the license is issued and the contents key Kc are added to the license data, so that the license is generated. Subsequently, the license data 341 is generated, as shown in Fig. 13.

Fig. 13 illustrates example contents stored in the storage unit 204, at the above-described step S15 shown in Fig. 9.

The contents shown in Fig. 13 includes the license data 341, blocks 351, 352-1 to 352-14, 353, 354-1 to 354-14, 355, 356-1 and 356-2, ···, 367, and 368-1 to 368-14.

The license data 341 is the license that is generated and added, at step S14 shown in Fig. 9. That is to say, the license 341 includes data on the license bounds shown as the expression Seed number = 0 to 9, data on the contents key Kc, and the license data. Where the Seed-generation unit 282 randomly generates random numbers, the generated random numbers are stored in the Seed number in sequence.

For example, the block 351 can be the picture I including encrypted data having the flag "81" and the Seed whose value is zero that are added thereto. The blocks 352-1 to 352-14 can be, for example, the pictures P and B including encrypted data having the flag "80" added thereto. The block 353 can be, for example, the picture I including encrypted data having the flag "81" and the Seed whose value is one that are added thereto. The blocks 354-1 to 354-14 can be, for example, the pictures P and B including encrypted data having the flag "80" added thereto. The block 355 can be, for example, the picture I including encrypted data having the flag "81" and the Seed whose value is two that are added thereto. The blocks 356-1 and 356-2 can be, for example, the pictures P and/or B including encrypted data having the flag "80" added thereto. The block 367 can be, for example, the picture I including encrypted data having the flag "81" and the Seed whose value is nine that are added thereto. The blocks 368-1 and 368-14 can be, for example, the pictures P and B including encrypted data having the flag "80" added thereto.

In relation to the above-described processing shown in Figs. 9 and 10, the license data 341 is generated, at step S14 shown in Fig. 9. The block 351 is generated by the first processing from step S31 to step S41 shown in Fig. 10. More specifically, the Seed is set to zero, at step S34 that is performed for the first time, and the Seed whose value is zero is encrypted by using the contents key Kc so that the block key Kb is generated, at step S35. Then, the data portion such as the picture I of the block 351 is encrypted by using the block key Kb, at step S37. Then, the result of determination performed at step S38 becomes yes, so that the flag "81" and the Seed whose value is zero are added to the block 351, at step S39. Further, the blocks 352-1 to 352-14 are generated by performing processing from step S37 to step S42 that are shown in Fig. 10 two to fifteen times. More specifically, where the processing corresponding to step S37 is performed for a second time, the block such as the picture B is encrypted by using the block key Kb. The above-described block key Kb is the same as that generated by performing the processing corresponding to step S35 for a first time. That is to say, one and the same block key Kb is used for a predetermined number of blocks. In this embodiment, the block key Kb is used for fifteen blocks. Then, at step S38 performed for a second time to a fifteenth time, it is determined that the Seed should not be added and the flag "80" is added, at step S40. Further, at step S42 performed for a first time to a fourteenth time, it is determined that the Seed of the next block should not be incremented.

That is to say, if it is determined that the Seed of the next block should be incremented, at step S42, the next block is a block corresponding to the block 353, that is, the picture I.

Hereinafter, the blocks 351 and 352-1 to 352-14 that are shown in Fig. 13 will be referred to as a block group, as required. Similarly, the blocks 353 and 354-1 to 354-14, and the blocks 367 and 368-1 to 368-14 are also referred to as block groups, as required. In relation to image data encoded based on the MPEG2 standards, a single block group corresponds to a single GOP.

Thus, where the contents encoded based on the MPEG2 standards are processed, the block key Kb is generated for every GOP and the encryption is performed for each of the blocks. That is to say, the block-division unit 252 divides the contents into blocks, where each of the blocks corresponds to a single picture, the Seed-generation unit 282 generates the Seed for every GOP, and the encryption unit 283 generates the block key Kb by encrypting the Seed by using the contents key Kc. Then, the block key Kb is used for encryption performed for all of the blocks of the GOP. In other words, the Seed is generated for a predetermined number of blocks and the Seed is encrypted by using the contents key Kc, whereby the block key Kb is generated. The predetermined number of blocks corresponding to the generated seed are encrypted by using the block key Kb.

Where audio contents are encrypted, the encoded audio contents are transmitted to the encryption unit 207 shown in Fig. 7, as a plurality of sound units. Therefore, the block-division unit 252 divides the contents into the sound units and the Seed-generation unit 282 increments the Seed by one for a predetermined number of the sound units. Here, the predetermined number corresponds to a time period of one-half second or more. Then, the Seed-generation unit 282 transmits the incremented Seed to the encryption unit 283.

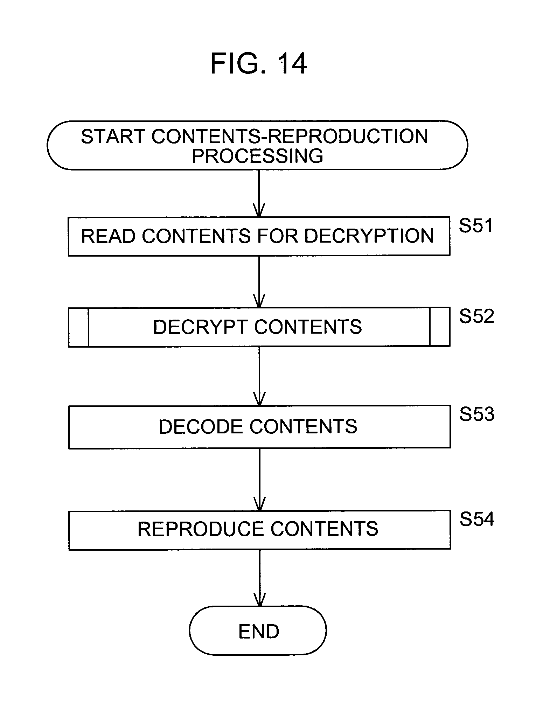

Fig. 14 is a flowchart illustrating processing performed by the PC 11 shown in Fig. 3 for reproducing the contents. The above-described processing is started when the user instructs to reproduce the contents via the operation-input unit 202.

The data-input unit 201 reads and transmits contents for encryption to the main-control unit 203 according to the instruction issued by the user via the operation-input unit 202, at step S51. For example, the data-input unit 201 reads the contents for encryption stored in the storage unit 204 according to the instruction transmitted from the user. In that case, the contents for encryption are stored in the storage unit 204 by performing the above-described processing shown in Fig. 9. Without being limited to the above-described embodiment, the data-input unit 201 can read contents for encryption from the distribution server 12, the DVD player 13, and/or the digital-TV receiver 14. In that case, the processing shown in Fig. 9 is performed by the distribution server 12, the DVD player 13, and/or the digital-TV receiver 14.

The decryption unit 208 decrypts the contents under the control of the main-control unit 203, at step S52. The details of the processing will be described later with reference to Fig. 15.

The decoding unit 206 decodes the decrypted contents under the control of the main-control unit 203, at step S53. As has been described, the contents are encoded, at step S12 shown in Fig. 9. Therefore, the decoding unit 206 decodes the contents based on standards corresponding to those by which the contents are encoded. The standards may be the MPEG2 standards, for example.

The data-output unit 212 reproduces the contents under the control of the main-control unit 203, at step S54. For example, the data-output unit 212 produces an image corresponding to the contents data on the display unit 57 under the control of the main-control unit 203, whereby the processing is terminated.

By performing the processing shown in Fig. 14, the contents is decrypted, decoded, and reproduced.

Next, processing for decrypting the contents will be described with reference to a flowchart shown in Fig. 15, where the processing corresponds to the details of step S52 shown in Fig. 14. The above-described processing is performed by the decryption unit 208 and the license-processing unit 211 that are shown in Fig. 8 under the control of the main-control unit 203 shown in Fig. 3.

The contents-input unit 301 shown in Fig. 8 receives the contents transmitted thereto, at step S61. The contents are read, at step S51 shown in Fig. 14. For example, the contents read at step S51 are encoded based on the MPEG standards and encrypted according to the processing flow shown in Fig. 9. Further, the contents are stored in the storage unit 204. Upon receiving contents including a plurality of blocks, such as the contents shown in Fig. 13, the contents-input unit 301 transmits a license such as the license data 341 shown in Fig. 13 to the block-key calculation unit 302, and transmits flags and Seeds that are prefixed to the blocks to the Seed-acquisition unit 332. Further, the contents-input unit 301 transmits the contents, that is, the blocks to the decryption unit 303 and transmits the license, that is, the license data 341 to the license-processing unit 211.

The contents-key-acquisition unit 331 acquires the contents key Kc from the license, that is, the license data 341 transmitted from the contents-input unit 301, at step S62. The contents key Kc is generated, at step S33 shown in Fig. 10, where step S33 corresponds to step S62. The one and the same contents key Kc is used for a single unit of contents.

The Seed-acquisition unit 332 determines whether or not the flag acquired at step S61 is "81", at step S63. That is to say, the Seed-acquisition unit 332 determines whether or not the block that is currently subjected to the processing is prefixed with a flag and a Seed. The flag "81" and the Seed are prefixed to the block including the picture I, where the block is encoded based on the MPEG2 standards, as has been described with reference to Fig. 10. Therefore, it is determined whether or not the block that is currently subjected to the processing includes the picture I. As described above, the flag "81" and the Seed are not added to each of the blocks, but added to a predetermined number of blocks, for example, fifteen pictures forming a single GOP. Therefore, the above-described determination is performed.

Where it is determined that the flag of the block that is currently subjected to the processing is "81", that is to say, the flag and the Seed are added to the block, at step S63, the Seed-acquisition unit 332 acquires and sets the Seed to the encryption unit 333 and the license-processing unit 211, at step S64. For example, the Seed-acquisition unit 332 acquires the Seed whose value is zero from the block 351 shown in Fig. 13 and transmits the Seed to the encryption unit 333 and the license-processing unit 211.

The license-processing unit 211 determines whether or not the number of the Seed that is transmitted from the Seed-acquisition unit 332, at step S64 falls within the license bounds. More specifically, since the license data 341 shown in Fig. 13 is transmitted to the license-processing unit 211, at step S61, the license-processing unit 211 determines whether or not the transmitted Seed falls within the bounds of the license data 341. For example, in the case of Fig. 13, the bounds of the license 341 is zero to nine and the value of the Seed of the block 351 is zero, whereby it is determined that the Seed falls within the bounds. Where it is determined that the Seed number does not fall within the license bounds, for example, where the value of the Seed is eleven, at step S65, the processing is terminated. Thus, the license determination is performed for each block group, that is, a single GOP. Since the license is added to each block group, it becomes possible to prevent the contents from being used improperly even though the contents are divided, or coupled to each other.

Where it is determined that the Seed number falls within the license bounds, for example, where the license bounds correspond to from zero to nine and the Seed value is zero, at step S65, the encryption unit 333 encrypts the Seed by using the contents key Kc and determines the encrypted Seed to be the block key Kb, at step S66. That is to say, the encryption unit 333 encrypts the Seed value that was set, at step S64, by using the contents key Kc transmitted, at step S62, thereby generating the block key Kb. More specifically, the encryption unit 333 calculates E (Kc, Seed), as shown by the expression Kb = E (Kc, Seed).

The encryption unit 333 transmits the generated block key Kb to the decryption unit 303, at step S67.

The decryption unit 303 decrypts a single encrypted block of the contents, at step S68. More specifically, the decryption unit 303 decrypts a single encrypted block transmitted from the contents-input unit 301 by using the block key Kb. In this embodiment, the single encrypted block corresponds to the encrypted picture I.

Where the Seed value is equivalent to the contents key Kc, the value of the block key Kb becomes the same as those. More specifically, where the contents key Kc that is generated, at step S33 shown in Fig. 10 and that is added, as the license data 341, at step S13 shown in Fig. 9 has the same value as that of the Seed that is added, at step S39 shown in Fig. 10, the value of the block key Kb generated, at step S66 becomes the same as the above-described values. In other words, when the block 351 is generated by the processing shown in Figs. 9 and 10, the block key Kb is generated based on the Seed of the block 351 and the contents key Kc included in the license data 341, so that the encrypted contents data in the block 351 is decrypted, as shown in Fig. 15.

The contents-input unit 301 determines whether or not the next block exists, at step S69. For example, where the block 351 shown in Fig. 13 is decrypted by the first processing, it is determined that the next block exists, since the block 351 is followed by the block 352-1 such as the picture B. Where it is determined that the next block exists, at step S69, the processing returns to step S63, and the processing from step S63 on down is repeated.

Fig. 13 shows a specific example of the above-described processing. Since the flag of the next block 352-1 is not "81", the determination result of step S63 becomes "NO" and a single block including encrypted data on the block 352-2 such as the picture B is encrypted by using the same block key Kb. The above-described processing is repeated until the block 352-14 shown in Fig. 13 is decrypted. In the case of the next block 353, it is determined that the flag is "81", at step S63 and the block key is recalculated. The recalculated block is different from the block key Kb used for the block 351. The block key used for the block 353 is referred to as a block key Kb'. The blocks 354-1 to 354-14 are decrypted by using the block key Kb' calculated for the block 353. Thus, the block key Kb is generated for each GOP and the GOP is encrypted. Therefore, the block key Kb is generated for each of the GOPs by using the Seed and the contents key Kc, so as to decrypt the GOP or the block. In other words, the block key Kb is generated for every predetermined number of blocks according to the contents key Kc and the number of the blocks or the stored Seed. Then, the predetermined number of blocks are decrypted by using the block key Kb.

Where the entire blocks or GOPs generating the contents are decrypted, it is determined that no block follows, at step S69, and the processing advances to step S70.

The contents-output unit 304 externally transmits the decrypted contents, at step S70. Then, the processing returns to step S52 shown in Fig..14. That is to say, the decrypted contents is decoded, at step S53 and reproduced, at step S54.

Thus, according to the processing shown in Figs. 1 to 15, a single unit of contents data is encrypted without using the contents key Kc that is used throughout the contents. The contents are divided into a plurality of blocks and the number corresponding to the blocks is encrypted by using the contents key Kc, whereby the block key Kb is generated. Since the plurality of blocks is encrypted by using the block key Kb, the contents can be safely transferred.

For example, according to this embodiment, the contents are encrypted by using the block key Kb instead of calculating an exclusive OR (XOR) of the contents and the contents key Kc, as is the case with the stream cipher system such as ISMA Crypt. Therefore, if the contents are identified, it is difficult to identify the block key Kb. Subsequently, the contents can be safely transferred. Incidentally, if one of the block keys Kb corresponding to groups of at least two blocks is identified, there is a little possibility that the entire contents are stolen, since the block keys Kb are different from one another. Therefore, the contents can be protected.

As for the processing shown in Fig. 15, the license determination corresponding to step S65 can be performed before step S63 is performed. That is to say, it can be determined whether or not the Seed number falls within the license bounds before the Seed is set to the encryption unit 333.

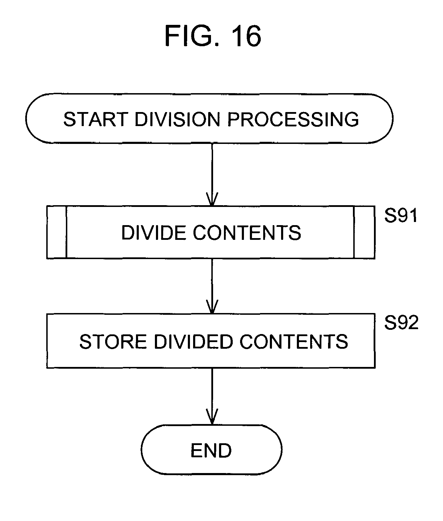

Fig. 16 is a flowchart illustrating processing performed for dividing the contents stored by the processing shown in Figs. 9 and 10. The above-described processing is started in the state where the contents, that is, encoded and encrypted contents are stored in the storage unit 204 through the processing shown in Figs. 9 and 10, and where the user instructs to divide the contents stored in the storage unit 204 by transmitting an instruction via the operation-input unit 202. Further, the above-described processing is performed by the PC 11 shown in Fig. 3.

The division unit 209 and the license-processing unit 211 divide the contents under the control of the main-control unit 203, at step S91. For example, the division unit 209 divides the contents stored in the storage unit 204 according to the instruction transmitted from the user, and the license-processing unit 211 generates the license corresponding to the divided contents. The details of the above-described processing will be described later, with reference to Fig. 17.

The main-control unit 203 stores the divided contents in the storage unit 204, at step S92, whereby the processing is terminated.

Subsequently, the contents stored in the storage unit 204 can be divided in consideration of the license. For example, a single unit of contents such as a movie can be divided or edited according to an instruction transmitted from the user.

Fig. 17 is a flowchart illustrating processing performed for dividing contents, where the processing corresponds to the details of step S91 shown in Fig. 16.

The division unit 209 determines whether or not the contents for which the user transmits the division instruction can be divided, at step S111. More specifically, a license including data indicating whether or not the contents can be divided, such as the license data 341 shown in Fig. 13 is added to the contents and stored in the storage unit 204, at steps S14 and S15 shown in Fig. 9. Therefore, the division unit 209 determines whether or not the contents can be divided according to the license such as the license data 341 added to the contents.

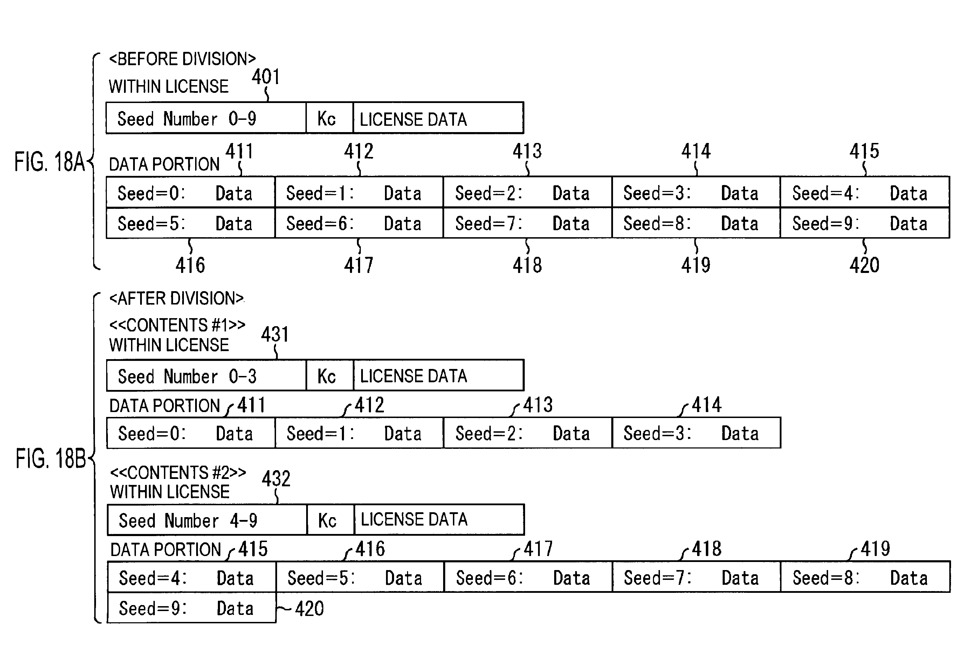

Where it is determined that the contents can be divided, at step S111, the division unit 209 reads and divides the contents via the main-control unit 203, at step S112. The above-described processing will be described, with reference to Figs. 18A and 18B.

Fig. 18A shows an example where contents that are not yet divided include the Seeds 0 to nine. Comparing Fig. 13 to Fig. 18A, the block group including the blocks 351 and 352-1 to 352-14 shown in Fig. 13 corresponds to a block group 411 shown in Fig. 18A. That is to say, the block group 411 is a set or group of blocks sharing the common Seed. In other words, the block group 411 includes data corresponding to a single GOP. In the case of Fig. 18A, a license 401 included in the contents, that is, the license added by the processing shown in Fig. 9 includes data indicating that the Seed number is zero to nine, the contents key Kc, and license data. Further, the data portion of the contents includes block groups 411 to 420 corresponding to the Seed numbers zero to nine. The division unit 209 divides the contents shown in Fig. 18A on the border between the block group 414 and the block group 415. It is to be noted that the contents can be divided only on the border between the block groups. That is to say, the contents are divided on the border between the GOPs, and not divided on the borders between pictures. Subsequently, the contents shown in Fig. 18A are divided into contents #1 including the blocks 411 to 414 and contents #2 including blocks 415 to 419.

The license-processing unit 211 generates the licenses corresponding to the divided contents, at step S113. For example, where the contents shown in Fig. 18A are divided into the contents #1 and the contents #2, as shown in Fig. 18B, the license-processing unit 211 generates the licenses corresponding to the divided contents according to the original license 401. More specifically, the license-processing unit 211 determines the Seed-number bounds of the license shown in Fig. 18A so that the Seed numbers of the contents #1 become zero to three and those of the contents #2 become four to nine. At that time, the contents key Kc is equivalent to that of the license 401 shown in Fig. 18A. Although the license data is not changed in the above-described processing, the reproduction conditions of the license data can be divided into halves so that each of the halves corresponds to either the contents #1 or the contents #2.

Thus, the license-processing unit 211 generates a license 431 including data on the Seed number that is zero to three, the data on the contents key Kc, and license data, as the license corresponding to the contents #1 obtained by the division. The license-processing unit 211 further generates a license 432 including data on the Seed number that is four to nine, data on the contents key Kc, and license data, as the license corresponding to the contents #2 obtained by the division.

The license-processing unit 211 disables an original license such as the license 401 shown in Fig. 18A, at step S114.

The license-processing unit 211 enables two new licenses, such as the licenses 431 and 432 shown in Fig. 18B, at step S115. After that, the processing returns to step S91 shown in Fig. 16 and the processing from step S91 on down is performed. On the other hand, where it is determined that the contents cannot be divided, at step S111, the main-control unit 203 performs error processing, at step S116, whereby the processing is terminated. The above-described error processing corresponds to processing performed for producing the image of a message showing that the contents cannot be divided on the display unit 57, for example.

Since the Seed value, that is, the Seed number is stored in the license by performing the processing shown in Fig. 17, it becomes possible to prevent the license from being used improperly. Further, even though the contents key Kc used throughout the contents is stolen, the contents can be prevented from being used improperly. This is because the blocks are not encrypted by using the contents key Kc, but encrypted by using the block keys Kb calculated by using the Seed and the contents key Kc that are added to each of the block groups.

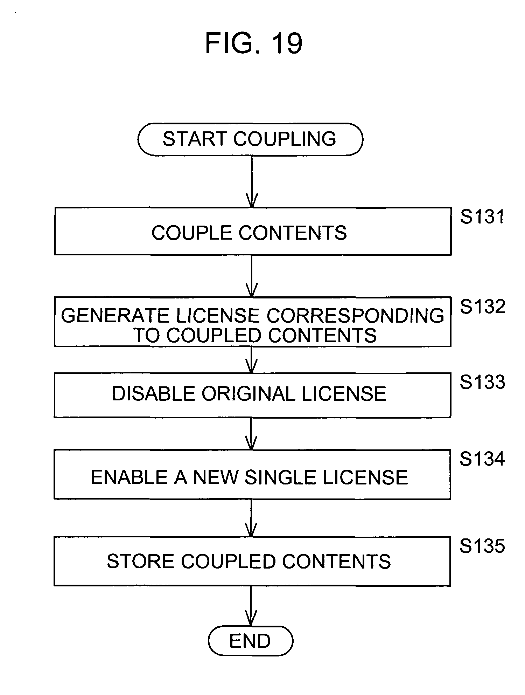

Fig. 19 is a flowchart illustrating processing performed for coupling the contents divided by the processing shown in Figs. 16 and 17. The processing shown in Fig. 19 is started in the state where the divided contents, that is, the encoded and encrypted contents are stored in the storage unit 204 by the processing shown in Figs. 16 and 17, and where the user transmits an instruction to couple the contents that are divided and stored in the storage unit 204 via the operation-input unit 202. The above-described processing is performed by the PC 11 shown in Fig. 3.

The coupling unit 210 couples the divided contents to each other under the control of the main-control unit 203, at step S131. For example, the coupling unit 210 couples the contents that are divided into two portions and stored in the storage unit 204 to each other. More specifically, the coupling unit 210 couples the contents #1 and #2 that are obtained by the division to each other, so as to obtain a single unit of contents shown in Fig. 18A, for example.

The license-processing unit 211 generates the license corresponding to the coupled contents, at step S132. For example, the license-processing unit 211 generates the license 401 according to the licenses 431 and 432 shown in Fig. 18B.

The license-processing unit 211 disables an original license, at step S133. For example, the license-processing unit 211 disables the licenses 431 and 432 that are not yet coupled to each other.

The license-processing unit 211 enables a new single license, at step S134. For example, the license-processing unit 211 enables the license 401 that is newly generated by the coupling performed, at step S132.

According to the processing shown in Fig. 19, the license corresponding to the contents coupled at step S132 is generated. However, where the above-described license 401 that was disabled, at step S114 shown in Fig. 17, is not deleted, the step S132 may be skipped so that the licenses that are not yet coupled to each other are disabled, at step S133, and the licenses that are coupled to each other are enabled, at step S134.

The main-control unit 203 stores the coupled contents and the license in the storage unit 204, at step S135, whereby the processing is terminated.

The processing shown in Fig. 19 allows adding a license to the contents in consideration of the bounds of the Seeds included in the license before the contents are coupled to each other. More specifically, where a single unit of contents such as a movie is divided into at least two portions, the processing shown in Fig. 19 allows coupling the divided portions to each other according to an instruction transmitted from the user. Thus, the processing shown in Fig. 19 allows editing movies, for example.

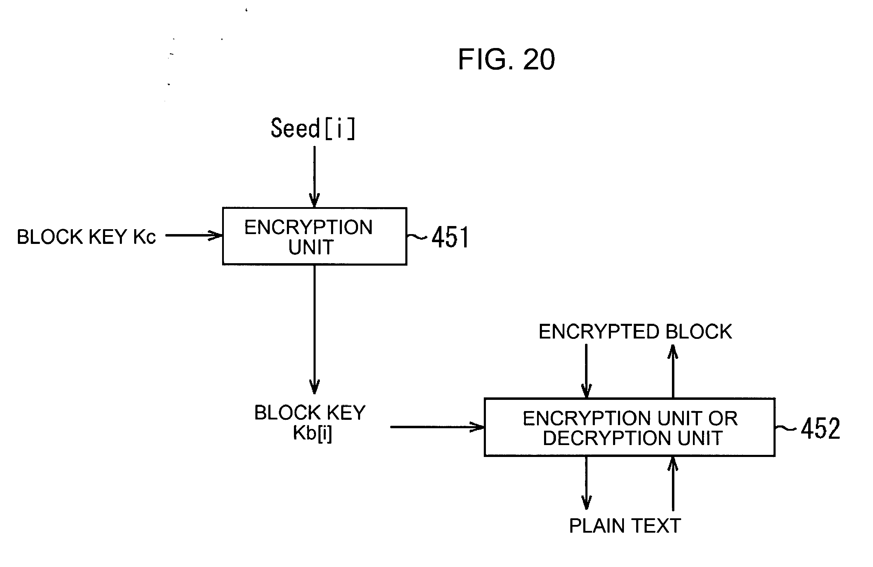

The above-described processing will be described with reference to Fig. 20.

First, the contents key Kc used throughout a single unit of contents and the value of Seed [i] that changes for every predetermined number of blocks are transmitted to the encryption unit 451. Here, the sign i denotes an arbitrary natural number. Then, the encryption unit 451 encrypts the Seed [i] by using the contents key Kc, and generates and externally transmits the block key Kb [i]. The block key Kb [i] is transmitted to an encryption/decryption unit 452. Where the contents should be encrypted, the encryption/decryption unit 452 functions, as an encryption unit, and where the contents should be decrypted, the encryption/decryption unit 452 functions, as a decryption unit. That is to say, where the contents should be encrypted, the encryption/decryption unit 452 reads plain text, encrypts the plain text by using the block key Kb[i], and externally transmits encrypted blocks. Incidentally, according to Fig. 20, arrows shown on the right half of a box indicating the encryption/decryption unit 452 go upward. On the other hand, where the encrypted contents should be decrypted, the encryption/decryption unit 452 reads the encrypted blocks, decrypts the encrypted blocks by using the contents key Kb [i], and externally transmits plain text, that is, the decrypted blocks. Incidentally, according to Fig. 20, arrows shown on the left half of the box indicating the encryption/decryption unit 452 go downward.

Thus, the block key Kb [i] generated by encrypting the Seed value that changes for every predetermined number of blocks by using the contents key Kc is used in place of the contents key Kc, as a key for encrypting plain text and decrypting encrypted blocks into the plain text. Therefore, it becomes possible to prevent the contents from being interchanged and copied improperly.

As has been described, the encryption unit 207 increments the Seed value by one every time a minimum encryption unit, that is, a block group changes, and determines the Seed encrypted by using the contents key Kc that is used throughout a single unit of contents such as a data stream to be the block key Kb. Then, the encryption unit 207 encrypts a plurality of blocks of the minimum encryption unit or the block group by using the block key Kb. Further, the encryption unit 207 prefixes the encryption unit with a flag indicating the presence/absence of the Seed and the Seed number. The flag indicating the presence/absence of the Seed and the Seed number are used for decrypting the blocks. More specifically, the decryption unit 208 reads the Seed value every time the minimum encryption unit or the block group changes, and determines the Seed encrypted by using the contents key Kc used throughout the single contents unit (the data stream) to be the block key Kb. Then, the decryption unit 208 decrypts the plurality of blocks of the minimum encryption unit or the block group by using the block key Kb.

As described above, the contents are encrypted by using the block key instead of using the XOR of the contents. Therefore, the contents can be highly protected.

An example where the contents are encrypted by using the XOR and the division unit 209 divides the contents is described below. Where a copy of predetermined contents is generated and added to the end of the predetermined contents and where the division unit 209 divides the predetermined contents into two units of contents, the same license as that added to the predetermined contents before being divided is added to each of the two units of contents. Subsequently, the duplication of the predetermined contents is generated.

However, according to the above-described embodiment of the present invention, the block key Kb for encryption is changed for every predetermined number of blocks, that is, a predetermined number of access units, and the Seed number is adjusted, so as to be valid, on the license side. The above-described processing corresponds to processing from step S113 to step S115 shown in Fig. 17, for example. Subsequently, the contents can be prevented from being copied improperly.

Further, where the contents are encrypted by using the XOR and where contents that are not encrypted, that is, plain text is identified, an encryption key that was used for encrypting the contents, such as the contents key Kc is easily identified, based on the encrypted contents and the plain text. In that case, the contents may be interchanged improperly by using the contents key Kc. However, according to the above-described embodiment of the present invention, the contents are encrypted by using the block key Kb in place of the XOR so that the contents can be highly protected.

Further, where a system that can record is used and/or a CODEC decoder used by the user is widely available, for example, it is easy to generate a pair of encrypted contents and unencrypted contents or plain text. However, according to the above-described embodiment wherein contents are encrypted by using the block key Kb in place of the XOR, the block key Kb used for the encryption is prevented from being easily identified, even though the pair of the encrypted contents and the unencrypted contents is identified. In other words, the block key Kb is protected according to the encryption strength.

Thus, the above-described embodiment of the present invention is effective for encryption for streaming, so that the contents can be decrypted by using part of the entire data of the minimum encryption unit. In other words, data waste is reduced.

Further, since the encryption and decryption is used instead of calculating an XOR, the contents are prevented from being decrypted, even though part of the encrypted data is stolen. That is to say, the contents are highly protected.

Further, since the contents are encrypted by using a predetermined key such as the block key Kb, a device whose processing capacity is lower than that of the PC 11 can easily decrypt the contents that are encrypted and stored in the contents-removable medium 15. Here, the above-described device includes a Hi-MD player, MemoryStick Walkman™, and so forth. Subsequently, the cost of the encryption and decryption can be reduced.

Further, the block key Kb is generated for every single GOP for encrypting the contents. Therefore, the processing load of the above-described embodiment is lower than that of the case where the block key Kb is generated for each block, that is, a picture.

According to the above-described embodiment of the present invention, the PC 11 performs the encryption and decryption of contents. However, the contents encryption can be performed by an information-processing system on the distribution side including the distribution server 12, the DVD player 13, and the digital-TV receiver 14 that are shown in Fig. 1. After that, the contents can be encrypted according to the embodiment of the present invention and transmitted to the PC 11. In that case, the contents key Kc and the license bounds are included in the license of the contents for distribution, and the block group such as the picture I according to the above-described embodiment is prefixed with the flag and the Seed. Therefore, the PC 11 can decrypt the contents distributed thereto.

Further, the PC 11 can receive the contents that are encrypted and divided on the distribution side, so as to decrypt and couple the divided contents to each other. More specifically, a device on the distribution side, such as the distribution server 12 shown in Fig. 1 may include the encoding unit 205, the decryption unit 207, and the division unit 209 that are shown in Fig. 3 so that the device on the distribution side can perform the processing shown in Figs. 9, 10, 16, and 17. After that, the encrypted and divided contents stored in the storage unit 204, or the contents-removable medium 15 are transmitted to the PC 11 on the reception side, and the contents reproduction is performed by the PC 11.

Although the PC 11 performs the contents encryption according to the above-described embodiment, the contents encryption can be performed by any information-processing apparatus or system including the encryption unit 207 shown in Fig. 7. Further, the term "contents" can indicate information.

Although the PC 11 reproduces the contents stored in the storage unit 204 according to the above-described embodiment, the contents can be reproduced by any information-processing apparatus or system, where the contents-removable medium 15 can be inserted into the apparatus or system and where the apparatus or system has the decryption unit 208 shown in Fig. 8 according to the embodiment of the present invention.

Upon receiving contents encrypted by the information-processing apparatus and/or system including the distribution server 12, the DVD player 13, and the digital-TV receiver 14 based on an encryption method different from that according to the embodiment of the present invention, the PC 11 decrypts the encrypted contents and obtains plan text. Then, the PC 11 encrypts the contents or plain text according to an encryption method according to the embodiment of the present invention and stores the encrypted contents in the contents-removable medium 15. Thus, contents encrypted by various encryption methods can be re-encrypted by the encryption method according to the embodiment of the present invention and stored in the contents-removable medium 15.

Further, according to the above-described embodiment of the present invention, the Seed-generation unit 282 of the encryption unit 207 includes the counter and increments the counter by one at a time. However, the Seed-generation unit 292 may generate random numbers instead of incrementing the counter by one at a time. In that case, a generated Seed is also stored in a predetermined block, that is, the first block of a block group. Therefore, the decryption unit 208 can decrypt the contents with reliability.

Further, according to the above-described embodiment of the present invention, the encryption unit 207 and the decryption unit 208 are separately provided. However, the encryption unit 207 and the decryption unit 208 may be integrated into a single block.

Further, according to the above-described embodiment of the present invention, where contents encoded based on the MPEG standards are transmitted, the block-division unit 252 shown in Fig. 7 divides the contents into picture units and the Seed-generation unit 282 generates the Seed, that is, a number used for a block-encryption key for each of the GOPs. However, the block-division unit 252 can divide the contents into the GOPs. More specifically, the block-division unit 252 divides the contents into the GOPs, that is, predetermined units used for reproducing contents, the Seed-generation unit 282 generates the Seed for each of the GOPs divided by the block-division unit 252, the encryption unit 283 encrypts the Seed by using the contents key Kc and generates the block key Kb, and the encryption unit 254 encrypts the GOPs by using the block key Kb. Here, the term block key denotes a key used for each of the GOPs.

Further, according to the embodiment of the present invention, the Seed is generated for each of the GOPs. However, the Seed may be generated for each of the pictures.

In the above-described embodiment of the present invention, a single unit of contents is divided into two portions. However, the single unit of contents can be divided into a plurality of portions by performing processing that is the same as that of the above-described embodiment. Further, the plurality of contents portions can be integrated into a single unit by performing the same processing as the above-described processing performed for coupling the two portions of the contents to each other.

Further, according to the above-described embodiment, the license includes the contents key Kc and the Seed bounds corresponding to the license. However, the contents key Kc and data indicating the presence or absence of the license can be added to each of the blocks to which the Seeds are added, such as the GOPs, as a header.

Thus, an encryption unit and a decryption unit that are included in the encryption unit 207 and the decryption unit 208 are used for encrypting contents based on Advanced Encryption Standard (AES) and/or Data Encryption Standard (DES). However, other encryption methods can be used, so long as they are encryption methods to which any of the embodiments of the present invention can be applied, that is, block-encryption methods.

The above-described series of processing can be performed by at least one piece of hardware and/or at least one software program. Where the series of processing is performed by the software program, the software program is transmitted from a network, or a recording medium and installed.

The above-described recording medium can be a package medium separate from the PC 11, where the package medium includes the removable medium 91 storing a program. The above-described medium is distributed to the user for delivering the program to the user. Further, the recording medium can be delivered to the user, as a hard disk including the ROM 52 and/or the storage unit 59 storing the program, where the hard disk is provided in the information-processing apparatus or system.

In this specification, the above-described steps illustrating the computer program include not only processing procedures that are performed in time sequence according to the written order but also processing procedures that are not necessarily performed in time sequence. Namely, the latter processing procedures can be performed in parallel with each other, or separately.

It should be understood by those skilled in the art that various modifications, combinations, sub-combinations and alterations may occur depending on design requirements and other factors insofar as they are within the scope of the appended claims or the equivalents thereof.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An information-processing system for processing information, the information-processing system comprising:
unit-division means for dividing the information into predetermined units of information which is first units of information;
number-generation means for generating a single number for each of second units of information including the first units of information;
key-generation means for generating a first key used for encrypting each of the numbers;
first encryption means for generating a second key for each of the second units of information by encrypting the number generated for each of the second units of information by using the first key;
second encryption means for encrypting each of the first units of information by using the second key;
storage means for storing the first units of information encrypted by the second encryption means, the number, and the first key;
third encryption means for generating the second key for each of the second units of information by encrypting the number stored in the storage means by using the first key; and
decryption means for decrypting each of the first units of information that are encrypted and stored in the storage means by using the second key generated by the third encryption means.

2. A program for processing information, the program being configured to make a computer execute processing comprising the steps of:
dividing the information into predetermined units of information which is first units of information;
generating a single number for each of second units of information including the first units of information;
generating a first key used for encrypting each of the numbers;
performing first encryption wherein a second key is generated for each of the second units of information by encrypting the number generated for each of the second units of information by using the first key;
performing second encryption wherein each of the first units of information of the second unit of information is encrypted by using the second key;
performing control on storage of the first units of information encrypted by the second encryption, the number, and the first key;
performing third encryption wherein the second key is generated for each of the second units of information by encrypting the number that was stored under the control performed by the storage control by using the first key; and
decrypting each of the first units of information that are encrypted and stored under the control performed by the storage control by using the second key generated by the third encryption.

3. An information-processing apparatus for encrypting information, the information-processing apparatus comprising:
unit-division means for dividing the information into predetermined units of information, that is, first units of information;
number-generation means for generating a single number for each of second units of information including the first units of information;
key-generation means for generating a first key for encrypting each of the numbers;
first encryption means for generating a second key for each of the second units of information by encrypting the number generated for each of the second units of information by using the first key; and
second encryption means for encrypting each of the first units of information by using the second key.

4. The information-processing apparatus according to Claim 3, further comprising storage means that stores the second units of information, where each of the second units of information includes the first units of information that are encrypted by the second encryption means, the number generated for each of the second units of information so that the second unit of information and the number are correlated to each other, and the first key.

5. The information-processing apparatus according to Claim 3, wherein the first unit of information includes any one of a picture I, a picture B, and a picture P;
wherein the second unit of information is a single GOP, that is, a single group of pictures I, B, and/or P;
wherein the unit-division means divides the information into the pictures;
wherein the number-generation unit generates the number for each of the GOPs;
wherein the first encryption means generates the second key for each of the GOPs by encrypting the number by using the first key; and
wherein the second encryption means encrypts each of the pictures included in the GOP by using the second key.

6. The information-processing apparatus according to Claim 4, further comprising:
license-generation means for generating a first license relating to the information, where the first license includes at least the number that correlates to the second unit of information and that permits encryption for decrypting the correlated second unit of information, and the first key,
wherein the storage means stores the second units of information, where each of the second units of information includes the first units of information that are encrypted by the second encryption means, and the number generated for each of the second units of information so that the second unit of information and the number are correlated to each other, and further stores the first license including at least the first key.

7. The information-processing apparatus according to Claim 6, further comprising:
information-division means for dividing the encrypted information according to an instruction transmitted from a user,
wherein the license-generation means generates a second license corresponding to each of the divided units of information based on the information divided by the information-division means and the first license stored in the storage means.

8. An information-processing method used for an information-processing apparatus configured to encrypt information, the method comprising the steps of:
dividing the information into predetermined units of information, that is, first units of information;
generating a single number for each of second units of information including the first units of information;
generating a first key used for encrypting each of the numbers;
performing first encryption wherein a second key is generated for each of the second units of information by encrypting the number generated for each of the second units of information by using the first key; and
performing second encryption wherein each of the first units of information of the second unit of information is encrypted by using the second key.

9. A program for encrypting information, the program being configured to make a computer execute processing comprising the steps of:
dividing the information into predetermined units of information which is first units of information;
generating a single number for each of second units of information including the first units of information;
generating a first key used for encrypting each of the numbers;
performing first encryption wherein a second key is generated for each of the second units of information by encrypting the number generated for each of the second units of information by using the first key; and
performing second encryption wherein each of the first units of information of the second unit of information is encrypted by using the second key.

10. An information-processing apparatus wherein information is divided into predetermined units of information, that is, first units of information, a single number generated for each of second units of information including the first units of information is encrypted by using a first key generated for encrypting each of the numbers, whereby a second key is generated for each of the second units of information, and each of the encrypted first units of information is decrypted by using the second key, the information-processing apparatus comprising:
number-acquisition means for acquiring the number generated for each of the second units of information;
key-acquisition means for acquiring the first key for encrypting each of the numbers acquired by the number-acquisition means;
encryption means for generating a second key for each of the second units of information by encrypting the number acquired by the number-acquisition means by using the first key acquired by the key-acquisition means; and
decryption means for decrypting each of the first units of information that are encrypted and included in the second unit of information by using the second key generated by the encryption means.

11. The information-processing apparatus according to Claim 10,
wherein the first unit of information includes any one of a picture I, a picture B, and a picture P;
wherein the second unit of information is a single GOP, that is, a single group of the pictures I, B, and/or P; and
wherein the decryption means decrypts each of the pictures included in the GOP by using the second key.

12. The information-processing apparatus according to Claim 10, wherein the information further includes a license relating to the information, where the license includes at least the number that corresponds to the second unit of information and that permits encryption for decrypting the corresponding second unit of information, and the first key.

13. An information-processing method used for an information-processing apparatus wherein information is divided into predetermined units of information which is first units of information, a single number generated for each of second units of information including the first units of information is encrypted by using a first key generated for encrypting each of the numbers, whereby a second key is generated for each of the second units of information, and each of the encrypted first units of information is decrypted by using the second key, the information-processing method comprising the steps of:
acquiring the number generated for each of the second units of information;
acquiring the first key for encrypting each of the numbers acquired by the number acquisition;
performing encryption for generating the second key for each of the second units of information by encrypting the number acquired by the number acquisition by using the first key acquired by the key acquisition; and
decrypting each of the first units of information that are encrypted and included in the second unit of information by using the second key generated by the encryption.

14. A program wherein information is divided into predetermined units of information, that is, first units of information, a single number generated for each of second units of information including the first units of information is encrypted by using a first key generated for encrypting each of the numbers, whereby a second key is generated for each of the second units of information, and each of the encrypted first units of information is decrypted by using the second key, the program making a computer execute processing comprising the steps of:
acquiring the number generated for each of the second units of information;
acquiring the first key for encrypting each of the numbers acquired by the number acquisition;
performing encryption for generating the second key for each of the second units of information by encrypting the number acquired by the number acquisition by using the first key acquired by the key acquisition; and
decrypting each of the first units of information that are encrypted and included in the second unit of information by using the second key generated by the encryption.

15. An information-processing system for processing information, the information-processing system comprising:
a unit-division section that divides the information into predetermined units of information which is first units of information;
a number-generation section for generating a single number for each of second units of information including the first units of information;
a key-generation section for generating a first key used for encrypting each of the numbers;
a first encryption section for generating a second key for each of the second units of information by encrypting the number generated for each of the second units of information by using the first key;
a second encryption section for encrypting each of the first units of information by using the second key;
a storage section for storing the first units of information encrypted by the second encryption section, the number, and the first key;
a third encryption section for generating the second key for each of the second units of information by encrypting the number stored in the storage section by using the first key; and
a decryption section for decrypting each of the first units of information that are encrypted and stored in the storage section by using the second key generated by the third encryption section.

16. An information-processing apparatus for encrypting information, the information-processing apparatus comprising:
a unit-division section for dividing the information into predetermined units of information which is first units of information;
a number-generation section for generating a single number for each of second units of information including the first units of information;
a key-generation section for generating a first key for encrypting each of the numbers;
a first encryption section for generating a second key for each of the second units of information by encrypting the number generated for each of the second units of information by using the first key; and
a second encryption section for encrypting each of the first units of information by using the second key.

17. An information-processing apparatus wherein information is divided into predetermined units of information which is first units of information, a single number generated for each of second units of information including the first units of information is encrypted by using a first key generated for encrypting each of the numbers, whereby a second key is generated for each of the second units of information, and each of the first units of information is decrypted by using the second key, the information-processing apparatus comprising:
a number-acquisition section for acquiring the number generated for each of the second units of information;
a key-acquisition section for acquiring the first key for encrypting each of the numbers acquired by the number-acquisition section;
an encryption section for generating a second key for each of the second units of information by encrypting the number acquired by the number-acquisition section by using the first key acquired by the key-acquisition section; and
a decryption section for decrypting each of the first units of information that are encrypted and included in the second unit of information by using the second key generated by the encryption section.
